(19) Europäisches Patentamt
European Patent Office
Office européen des brevets

(11) EP 4 414 429 A1

(12) # EUROPEAN PATENT APPLICATION
published in accordance with Art. 153(4) EPC

(43) Date of publication:
**14.08.2024 Bulletin 2024/33**

(21) Application number: **22878183.7**

(22) Date of filing: **04.08.2022**

(51) International Patent Classification (IPC):
***C09C 1/44*** *(2006.01)* ***C09D 17/00*** *(2006.01)*
***C08F 220/06*** *(2006.01)* ***C08L 55/00*** *(2006.01)*
***C08L 101/00*** *(2006.01)* ***C09D 133/00*** *(2006.01)*
***C09D 201/00*** *(2006.01)* ***C09K 3/16*** *(2006.01)*
***C09D 11/10*** *(2014.01)* ***C01B 32/174*** *(2017.01)*
***C08K 3/04*** *(2006.01)* ***C09K 23/52*** *(2022.01)*

(52) Cooperative Patent Classification (CPC):
**C01B 32/174; C08F 220/06; C08F 290/06; C08K 3/04; C08L 1/08; C08L 55/00; C08L 101/00; C09C 1/44; C09C 1/48; C09D 7/61; C09D 11/10; C09D 17/00; C09D 133/00; C09D 133/24; C09D 201/00;** (Cont.)

(86) International application number:
**PCT/JP2022/029985**

(87) International publication number:
**WO 2023/058312 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2021 JP 2021163553**
**19.01.2022 JP 2022006677**

(71) Applicant: **DAINICHISEIKA COLOR & CHEMICALS MFG. CO., LTD.**
**Chuo-ku**
**Tokyo 103-8383 (JP)**

(72) Inventors:
- **DOI, Seiji**
  **Tokyo 103-8383 (JP)**
- **ONIDUKA, Hiroya**
  **Tokyo 103-8383 (JP)**
- **HASHIMOTO, Risa**
  **Tokyo 103-8383 (JP)**
- **UMEDA, Daichi**
  **Tokyo 103-8383 (JP)**
- **SHIMANAKA, Hiroyuki**
  **Tokyo 103-8383 (JP)**
- **KAMABAYASHI, Jun**
  **Tokyo 103-8383 (JP)**

(74) Representative: **Wächtershäuser & Hartz Patentanwaltspartnerschaft mbB**
**Weinstraße 8**
**80333 München (DE)**

(54) **CARBON MATERIAL DISPERSION AND USE THEREFOR**

(57) There is provided a carbon material dispersion in which a carbon material containing a carbon nanotube is dispersed favorably without substantially producing a coarse aggregate irrespective of liquid compositions and dispersion methods, the carbon material dispersion excellent in viscosity stability. The carbon material dispersion excluding one that contains a volatile salt contains: a carbon material containing a carbon nanotube; a liquid medium; and a dispersant. The content of the dispersant in terms of solid content based on 100 parts by mass of the carbon material is 204 parts by mass or less, and when a dilute dispersion is obtained by diluting the carbon material dispersion with a diluent comprising the liquid medium such that absorbance at a wavelength $W_M$, which is a median value of an arbitrary wavelength $W_L$ within a range of 350 to 550 nm and an arbitrary wavelength $W_H$ within a range of 650 to 850 nm, is 1.8±0.02, a ratio of absorbance $A_L$ at the wavelength $W_L$ to absorbance $A_H$ at the wavelength $W_H$, ($A_L/A_H$), is 1.60 or more for the dilute dispersion.

EP 4 414 429 A1

(52) Cooperative Patent Classification (CPC): (Cont.)
**C09K 3/16; C09K 23/52;** Y02E 60/50

## Description

### Technical Field

The present invention relates to a carbon material dispersion and a product obtained by using the carbon material dispersion.

### Background Art

Carbon materials (nanocarbon materials) such as carbon black, a carbon fiber, a carbon nanotube, graphite, and graphene are materials that have a six-membered cyclic graphite structure formed by covalent bonds of carbon atoms and exhibit various properties such as electric conductivity and heat transfer properties, and methods for utilizing the properties have been studied in a wide range of fields. For example, taking notice of the electrical characteristics, thermal characteristics, characteristics as a filler of carbon materials, use of carbon materials for antistatic agents, electrically conductive materials, plastic reinforcing materials, semiconductors, fuel cell electrodes, cathode rays for displays has been studied.

For these applications, a carbon material dispersion that exhibits good dispersibility for a carbon material and retains the dispersibility over a long period of time is required. However, nano-sized carbon materials have high surface energy and strong Van der Waals force acts thereon, and therefore nano-sized carbon materials are likely to aggregate. For this reason, a nano-sized carbon material, even when dispersed in a liquid medium, is likely to aggregate immediately in many cases. Thus, various studies have been made for the purpose of stably dispersing a carbon nanotube in a liquid medium.

General dispersants are used for stably dispersing a carbon material in a liquid medium. For example, in Patent Literatures 1 and 2, a solvent-based dispersion of a carbon nanotube, in which a cationic surfactant, such as an alkanol amine salt, or a polymeric dispersant, such as a styrene-acrylic resin, is used, has been proposed. Note that in Patent Literatures 3 and 4, a dispersion in which the dispersion state is determined by measuring an average particle size distribution has been proposed. In addition, in Patent Literatures 5 and 6, a dispersion in which the dispersion state is determined by viscosity measurement has been proposed. Further, in Patent Literature 7, evaluating the dispersibility of a carbon nanotube by a product of dynamic viscoelasticity and the phase angle has been proposed. In Patent Literatures 8 and 9, determining the dispersion state of a graphene dispersion by an absorbance ratio has been proposed. In Patent Literatures 10 and 11, dispersing a carbon nanotube using carboxymethyl cellulose or a salt thereof has been proposed.

### Citation List

### Patent Literature

Patent Literature 1: Japanese Patent Laid-Open No. 2010-174084
Patent Literature 2: Japanese Translation of PCT International Application Publication No. 2013-537570
Patent Literature 3: Japanese Patent Laid-Open No. 2007-076998
Patent Literature 4: Japanese Patent Laid-Open No. 2020-019924
Patent Literature 5: Japanese Patent Laid-Open No. 2010-254546
Patent Literature 6: Japanese Patent Laid-Open No. 2015-003859
Patent Literature 7: Japanese Patent No. 6860740
Patent Literature 8: Japanese Patent No. 6152924
Patent Literature 9: Japanese Patent No. 6696632
Patent Literature 10: Japanese Patent Laid-Open No. 2016-028109
Patent Literature 11: Japanese Patent Laid-Open No. 2016-204203

### Summary of Invention

### Technical Problem

To grasp the dispersion state of a carbon material containing a carbon nanotube in a liquid medium and determine whether the properties such as viscosity stability of a carbon material dispersion are good or poor, there are methods, for example, in which the dispersed particle size or particle size distribution of the carbon material in the carbon material dispersion is measured. However, to begin with, it is difficult to grasp the dispersion state of a carbon material

only by a median size of the particle size distribution. Further, a carbon nanotube is a fibrous material having an exceedingly large aspect ratio, and therefore it is difficult to conduct measurement distinguishing the fiber diameter and the fiber length and it is much more difficult to grasp the dispersion state accurately. Note that when a carbon nanotube is dispersed in a liquid medium by a general dispersion treatment method, it has been difficult to determine from the median size of the particle size distribution whether the dispersed particle size becomes smaller by disintegrating the aggregates of the carbon nanotube or the dispersed particle size becomes smaller by cutting the carbon nanotube itself.

In addition, as a method for determining whether the properties such as viscosity stability of a carbon dispersion are good or poor, there is also a method in which the viscosity of the carbon material dispersion is measured. However, the viscosity of a resultant dispersion is likely to vary by the difference in the type and concentration of the carbon material, including a carbon nanotube. Further, with regard to carbon nanotubes, when the aggregates begin to become disintegrated, the viscosity of a dispersion increases, and as the dispersion progresses, the viscosity of the dispersion decreases. When the dispersion further progresses, broken carbon nanotubes aggregate again, so that the viscosity of the dispersion increases. Accordingly, it has been difficult to determine whether the dispersion state of a carbon material is good or poor only by measuring the viscosity of the dispersion. Further, the viscosity stability of a prepared dispersion cannot be determined immediately and needs to be tested after long term storage.

For example, evaluating the dispersibility of a carbon nanotube by a product of dynamic viscoelasticity and the phase angle has been proposed in Patent 7. However, there is a possibility that the dynamic viscoelasticity takes a numerical value different from an assumption depending on the type of carbon nanotube to be used, which is the same as in the phase angle, and therefore it is substantially difficult to evaluate the dispersibility of a carbon nanotube.

Further, determining the dispersion state of a graphene dispersion by an absorbance ratio has been proposed in Patent Literatures 8 and 9. However, with regard to carbon materials (for example, a carbon nanotube) other than graphene, the wavelengths for determining the absorbance ratio are different, and proper concentration and absorbance ratio are also different. Therefore, it is difficult to evaluate the dispersion state of a carbon material other than graphene accurately.

The present invention has been completed in view of such problems of the conventional techniques, and an object of the present invention is to provide a carbon material dispersion in which a carbon material containing a carbon nanotube is dispersed favorably without substantially producing a coarse aggregate irrespective of liquid compositions and dispersion methods, the carbon material dispersion excellent in viscosity stability. Another object of the present invention is to provide various products obtained by using this carbon material dispersion.

**Solution to Problem**

That is, according to the present invention, a carbon material dispersion described below is provided.

[1] A carbon material dispersion comprising: a carbon material comprising a carbon nanotube; a liquid medium; and a dispersant, wherein when a dilute dispersion is obtained by diluting the carbon material dispersion with a diluent comprising the liquid medium such that absorbance at a wavelength $W_M$, which is a median value of an arbitrary wavelength $W_L$ within a range of 350 to 550 nm and an arbitrary wavelength $W_H$ within a range of 650 to 850 nm, is 1.2 to 2.2, a ratio of absorbance $A_L$ at the wavelength $W_L$ to absorbance $A_H$ at the wavelength $W_H$, ($A_L/A_H$), is 1.40 or more for the dilute dispersion.

[2] The carbon material dispersion according to [1], wherein the diluent is a blank solution having the same composition as that of the carbon material dispersion except that the carbon material is not contained.

[3] The carbon material dispersion according to [1] or [2], wherein the wavelength $W_L$ is 380 nm, the wavelength $W_H$ is 780 nm, and the wavelength $W_M$ is 580 nm, absorbance at the wavelength $W_M$ is 1.5 to 2.0, and the ratio of the absorbance $A_L$ to the absorbance $A_H$, ($A_{380}/A_{780}$), is 1.60 or more.

[4] The carbon material dispersion according to any one of [1] to [3], wherein the liquid medium is an aqueous medium, the dispersant is a cellulose derivative or a polymeric dispersant, the cellulose derivative is such that a 1%-by-mass aqueous solution thereof has a viscosity of 20 to 500 mPa·s and a degree of etherification thereof is 0.5 to 0.9, and the polymeric dispersant is a polymer comprising 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, wherein

the monomer 3 comprises $\alpha$-methylstyrene and (meth)acrylic acid, and
the content of a constituent unit derived from $\alpha$-methylstyrene is 0.5 to 5% by mass, the content of a constituent unit derived from (meth)acrylic acid is 0.5 to 30% by mass, and the number average molecular weight is 5,000 to 20,000.

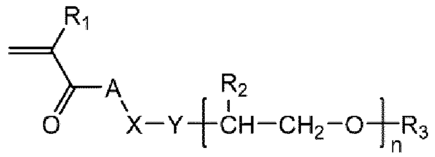

(1)

wherein $R_1$ represents a hydrogen atom or a methyl group, A represents O or NH, X represents an ethylene group or a propylene group, Y represents O, NHCOO, or NHCONH, each of $R_2$ independently represents a hydrogen atom or a methyl group, n represents an average number of repeating units of 20 to 100, and $R_3$ represents a hydrogen atom or a methyl group, provided that the number $n_H$ of repeating units where $R_2$ is a hydrogen atom is 1/2 or more of the number $n_T$ of repeating units in the whole polymer.

[5] The carbon material dispersion according to [4], wherein the cellulose derivative is carboxymethyl cellulose or carboxymethyl cellulose sodium salt.

[6] The carbon material dispersion according to any one of [1] to [3], wherein the liquid medium is an organic solvent, and the dispersant is a polymer comprising 3 to 55% by mass of a constituent unit (A) derived from a monomer A represented by the following formula (A), 30% by mass or less of a constituent unit (B) derived from a monomer B represented by the following formula (B), 45 to 90% by mass of a constituent unit (C) derived from a monomer C represented by the following formula (C), and 0.5 to 20% by mass of a constituent unit (D) derived from a monomer D copolymerizable with the monomers A, B, and C, the polymer having an amine value of 100 mgKOH/g or less and a number average molecular weight of 5,000 to 20,000.

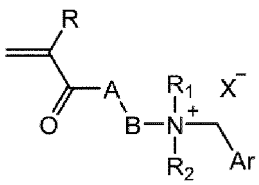

(A)

wherein R represents a hydrogen atom or a methyl group, A represents O or NH, B represents an ethylene group or a propylene group, $R_1$ and $R_2$ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl) imide.

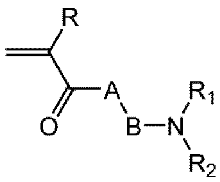

(B)

wherein R represents a hydrogen atom or a methyl group, A represents O or NH, B represents an ethylene group or a propylene group, and $R_1$ and $R_2$ each independently represent a methyl group or an ethyl group.

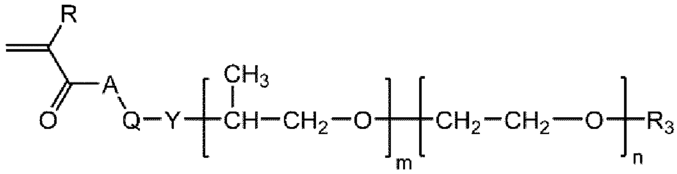

(C)

wherein R represents a hydrogen atom or a methyl group, A represents O or NH, Q represents an ethylene group r a methylethylene group, Y represents O, NHCOO, or NHCONH, m and n each independently represent an average number of repeating units of 0 or more and satisfy m + n = 20 to 100, and $R_3$ represents a C1-18 alkyl group, aryl group, or alkylaryl group.

[7] The carbon material dispersion according to any one of [1] to [6], wherein the content of the dispersant based on 100 parts by mass of the carbon material is 10 to 500 parts by mass, the content of the carbon material is 10%

by mass or less, and the content of the dispersant is 30% by mass or less.

Further, according to the present invention, products described below are provided.

[8] A product of any one of a paint, an ink, a coating agent, a material for a resin-shaped article, an electrically conductive material, a thermally conductive material, and an antistatic agent, the product containing the carbon material dispersion according to any one of [1] to [7].

[9] A product of any one of a battery material and a mechanical component, the product including a film formed with the carbon material dispersion according to any one of [1] to [7] .

**Advantageous Effects of Invention**

The present invention can provide a carbon material dispersion in which a carbon material containing a carbon nanotube is dispersed favorably without substantially producing a coarse aggregate irrespective of liquid compositions and dispersion methods, the carbon material dispersion excellent in viscosity stability. Further, the present invention can provide various products obtained by using this carbon material dispersion.

It is expected that a film having, for example, high transparency can be formed by selecting the type and the like of the carbon nanotube to be used for the carbon material dispersion. Further, a carbon material containing a carbon nanotube in a state of being sufficiently disintegrated is dispersed, and therefore it is expected that the properties such as electric conductivity, thermal conductivity, and antistatic properties of the carbon nanotube itself are exhibited to a great extent.

**Description of Embodiments**

<Carbon Material Dispersion>

Hereinafter, embodiments of the present invention will be described, but the present invention is not limited to the following embodiments. The carbon material dispersion of the present invention contains: a carbon material containing a carbon nanotube; a liquid medium; and a dispersant. When a dilute dispersion is obtained by diluting the carbon material dispersion with a diluent comprising the liquid medium such that absorbance at a wavelength $W_M$, which is a median value ( $(W_L + W_H)/2$) of an arbitrary wavelength $W_L$ within a range of 350 to 550 nm and an arbitrary wavelength $W_H$ within a range of 650 to 850 nm, is 1.2 to 2.2, a ratio of absorbance $A_L$ at the wavelength $W_L$ to absorbance $A_H$ at the wavelength $W_H$, ($A_L/A_H$), is 1.40 or more. Hereinafter, the carbon material dispersion is also referred to simply as "dispersion."

(Carbon Material)

The carbon material contains a carbon nanotube. As the carbon nanotube, a multi-walled carbon nanotube that has multilayers, a single-walled carbon nanotube that has a single layer, and the like can be used. The diameter, length, shape, production method, and the like are not particularly limited, and any of carbon nanotubes can be used. In the carbon nanotube, a metal or a salt of a metal, such as platinum, palladium, or the like, may be doped. In addition, the carbon nanotube may be surface-modified by an oxidation treatment, a plasma treatment, a radiation treatment, a corona treatment, a coupling treatment, or the like.

As the carbon material other than the carbon nanotube, carbon black, a carbon fiber, graphite, graphene, and the like can be used. Examples of the carbon black include acetylene black, furnace black, thermal black, and Ketjen black. The structure and values of physical properties, such as oil absorption and specific surface area, of the carbon black and whether or not the carbon black is subjected to a surface modification or the like, such as oxidation, are not particularly limited, and conventionally known carbon black can be used.

Examples of the carbon fiber include a PAN-based carbon fiber using polyacrylonitrile as a raw material, a pitch-based carbon fiber using pitch as a raw material, and recycled products thereof. Among others, the carbon fiber is preferably a carbon nanofiber having a nano-sized fiber diameter and having a cylindrical shape obtained by winding a six-membered cyclic graphite structure. The particle size, fiber diameter, fiber length, shape, production method, and the like of the carbon material other than the carbon nanotube are not particularly limited. In the carbon material, a metal or a salt of a metal, such as platinum or palladium, may be doped. The carbon material may be surface-modified by an oxidation treatment, a plasma treatment, a radiation treatment, a corona treatment, a coupling treatment, or the like.

(Liquid Medium)

As the liquid medium, an aqueous medium or an organic solvent can be used. When the liquid medium is an aqueous medium, the carbon material dispersion is an aqueous dispersion. When the liquid medium is an organic

solvent, the carbon material dispersion is a solvent-based (oil-based) dispersion.

As the aqueous medium, water or a mixed solvent of water and a water-soluble organic solvent can be used. An aqueous dispersion using an aqueous medium as a liquid medium is a more environment-friendly dispersion. Examples of the water-soluble organic solvent include alcohols, such as methanol, ethanol, and isopropyl alcohol; polyhydric alcohols, such as ethylene glycol, propylene glycol, and glycerin; ethers, such as tetrahydrofuran; glycol ethers, such as diethylene glycol, triethylene glycol, diethylene glycol monomethyl ether, diethylene glycol monobutyl ether, ethylene glycol dimethyl ether, propylene glycol monomethyl ether, propylene glycol monoethyl ether, propylene glycol monopropyl ether, dipropylene glycol monomethyl ether, and tripropylene glycol monomethyl ether; glycol ether esters, such as diethylene glycol monomethyl ether acetate; amides, such as pyrrolidone, N-methylpyrrolidone, dimethyl formamide, dimethyl acetamide, 3-methoxy-N,N-dimethylpropanamide, and 3-butoxy-N,N-dimethylpropanamide; urea-based solvents, such as tetramethyl urea, and dimethyl-1,3-imidazolidinone; sulfur-containing solvents, such as dimethyl sulfoxide and sulfolane; and ionic liquids, such as 1-ethyl-3-methylimidazolium chloride. The content of the water-soluble organic solvent in the dispersion is preferably set to 20% by mass or less, more preferably 10% by mass or less. When the content of the water-soluble organic solvent in the dispersion is more than 20% by mass, the function of the dispersant may be likely to be lowered in some cases.

As the water-soluble organic solvent, isopropyl alcohol (IPA) or ethanol is preferably used. When these water-soluble organic solvents are used, wettability to a substrate or drying performance of a coating film can be improved in using the dispersion as an ink or a coating material.

When the carbon material dispersion is a solvent-based (oil-based) dispersion, a conventionally known organic solvent can be used as the organic solvent. Note that water can also be used together with the organic solvent. Examples of the organic solvent include hydrocarbon-based solvents such as hexane, toluene, and xylene; alcohol-based solvents such as methanol, ethanol, isopropanol, butanol, and dodecanol; ketone-based solvents such as acetone, methyl ethyl ketone, diethyl ketone, and isobutyl methyl ketone; ester-based solvents such as ethyl acetate, butyl acetate, amyl acetate, dimethyl succinate, dimethyl adipate, methyl lactate, and dimethyl lactate; ether-based solvents such as dipropyl ether, tetrahydrofuran, and dioxane; carbonate-based solvents such as dimethyl carbonate, ethylene carbonate, and propylene carbonate; amide-based solvents such as N,N-dimethylformamide, N,N-dimethylacetamide, pyrrolidone, N-methylpyrrolidone, 3-methoxy-N,N-dimethylpropanamide, and 3-butoxy-N,N-dimethylpropanamide; urea-based solvents such as tetramethylurea and dimethyl imidazolidinone; sulfoxide-based solvents such as dimethyl sulfoxide; glycol monoether-based solvents such as ethylene glycol, propylene glycol, diethylene glycol, ethylene glycol methyl ether, ethylene glycol butyl ether, diethylene glycol methyl ether, diethylene glycol monobutyl ether, triethylene glycol monobutyl ether, propylene glycol monomethyl ether, propylene glycol monopropyl ether, propylene glycol monobutyl ether, and dipropylene glycol monomethyl ether; glycol diether-based solvents such as ethylene glycol dimethyl ether, diethylene glycol dimethyl ether, diethylene glycol diethyl ether, and dipropylene glycol dimethyl ether; and glycol ether monoether ester-based solvents such as ethylene glycol monomethyl ether acetate, diethylene glycol monomethyl ether acetate, propylene glycol monomethyl ether acetate, and propylene glycol monobutyl ether acetate.

In addition, a reactive monomer, such as a (meth)acrylic monomer, a vinyl ether-based monomer, an epoxy compound, or an oxetane compound, can be used as the organic solvent. By using such a reactive monomer as the organic solvent, a carbon material dispersion with which an ultraviolet ray/electron beam curable ink, an ultraviolet ray/electron beam curable coating agent, and the like can be prepared can be made.

(Dispersant)

The dispersant is a constituent for dispersing the carbon material in the liquid medium. As the dispersant, anionic, cationic, nonionic, and amphoteric surfactants; and a polymeric dispersant can be used. Among others, a polymer (resin ) is preferably used as the dispersant. When the liquid medium is an aqueous medium containing water, the dispersant is preferably a cellulose derivative or a polymeric dispersant.

Examples of the cellulose derivative which is used as the dispersant when the liquid medium is an aqueous medium containing water include methyl cellulose, carboxymethyl cellulose, hydroxyethyl cellulose, hydroxypropylmethyl cellulose, and metal salts thereof. Among others, carboxymethyl cellulose and carboxymethyl cellulose sodium salt are preferable. Further, the cellulose derivative is preferably such that a 1%-by-mass aqueous solution thereof has a viscosity of 20 to 500 mPa·s and a degree of etherification thereof is 0.5 to 0.9. By using such a cellulose derivative, the carbon nanotube can be dispersed more favorably and storage stability can be improved.

The polymeric dispersant which is used as the dispersant when the liquid medium is an aqueous medium containing water is preferably a polymer containing 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, the polymer having a number average molecular weight of 5,000 to 20,000.

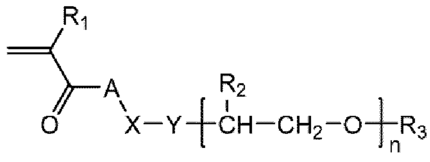

(1)

wherein $R_1$ represents a hydrogen atom or a methyl group, A represents O or NH, X represents an ethylene group or a propylene group, Y represents O, NHCOO, or NHCONH, each of $R_2$ independently represents a hydrogen atom or a methyl group, n represents an average number of repeating units of 20 to 100, and $R_3$ represents a hydrogen atom or a methyl group, provided that the number $n_H$ of repeating units where $R_2$ is a hydrogen atom is 1/2 or more of the number $n_T$ of repeating units in the whole polymer.

Dimethylaminoethyl (meth)acrylate or the like is also included as a general basic monomer. However, by using at least any one of 2-vinylpyridine, 4-vinylpyridine, and 1-vinylimidazole, dispersion stability of the carbon material dispersion can be improved more and the viscosity of the carbon material dispersion can be lowered. Each of 2-vinylpyridine, 4-vinylpyridine, and 1-vinylimidazole is a monomer having an aromatic ring having a structure similar to the six-membered cyclic structure of the carbon material. Therefore, it is considered that by adopting the constituent unit (1) derived from at least any one of these monomers, the adsorption power to the carbon material due to Van der Waals force or $\pi$-$\pi$ stacking can be enhanced. Further, the surface of the carbon material may be oxidized in some cases and a carboxy group or a phenolic hydroxy group may be present thereon in some cases. It is considered that by forming an ionic bond between the carboxy group or the phenolic hydroxy group and the basic group in the constituent unit (1), the polymeric dispersant is more likely to be adsorbed to the carbon material and the dispersibility is improved further. Note that 4-vinylpyridine is particularly preferable as the monomer 1.

By using a quaternary ammonium salt of 2-vinylpyridine, 4-vinylpyridine, or 1-vinylimidazole as the monomer 1, the dispersibility can be enhanced further. By making the constituent unit derived from at least any one of 2-vinylpyridine, 4-vinylpyridine, and 1-vinylimidazole into a quaternary ammonium salt, the constituent unit (1) derived from a quaternary ammonium salt can be prepared. For example, a halide, a sulfuric acid ester, or the like can be used as a material for forming a quaternary ammonium salt (quaternary ammonium salt-forming agent). Examples of the halide include methyl chloride and benzyl chloride. Examples of the sulfuric acid ester include dimethyl sulfate and diethyl sulfate. Examples of the quaternary ammonium salt include an arylmethyl halide. Examples of the arylmethyl group include a benzyl group, a naphthylmethyl group, an anthracenylmethyl group, and a pyrenylmethyl group. Among others, a naphthylmethyl group is preferable.

The monomer 2 is a macromonomer represented by the following formula (1) and having a polyalkylene glycol chain. By introducing the constituent unit (2) derived from the monomer 2, a polymer having a structure in which the polyalkylene glycol chain is grafted can be prepared. The polyalkylene glycol chain dissolves in water that is a liquid dispersion medium. Then, the constituent units (1) adsorbed to the carbon material function as steric hindrance among particles due to the dissolution of the polyalkylene glycol chain and repel one another, making it possible to disperse the carbon material in the liquid medium favorably and stably over a long period of time.

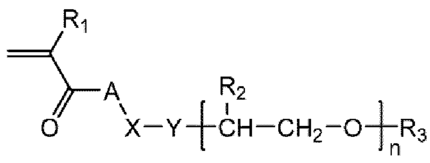

(1)

wherein $R_1$ represents a hydrogen atom or a methyl group, A represents O or NH, X represents an ethylene group or a propylene group, Y represents O, NHCOO, or NHCONH, each of $R_2$ independently represents a hydrogen atom or a methyl group, n represents an average number of repeating units of 20 to 100, and $R_3$ represents a hydrogen atom or a methyl group, provided that the number $n_H$ of repeating units where $R_2$ is a hydrogen atom is 1/2 or more of the number $n_T$ of repeating units in the whole polymer.

The molecular weight of the monomer 2 represented by formula (1) is about 880 to about 5,800. In formula (1), when the number $n_H$ of repeating units where $R_2$ is a hydrogen atom is 1/2 or more of the number $n_T$ of repeating units in the whole polymer, thereby it is possible to make the polyalkylene glycol chain water-soluble. Among others, the number $n_H$ of repeating units where $R_2$ is a hydrogen atom is 3/5 or more of the number $n_T$ of repeating units in the whole polymer.

The monomer 3 is a monomer copolymerizable with the monomer 1 and the monomer 2. As the monomer 3, a (meth)acrylic acid-based monomer is preferably used. Specific examples of the monomer 3 include (meth)acrylic acid; monofunctional (meth)acrylates having a substituent such as methyl, ethyl, propyl, butyl, amyl, 2-ethylhexyl, isooctyl, nonyl, dodecyl, hexadecyl, octadecyl, isostearyl, behenyl, cyclohexyl, trimethylcyclohexyl, t-butyl cyclohexyl, benzyl,

methoxyethyl, butoxyethyl, phenoxyethyl, nonylphenoxyethyl, glycidyl, isobornyl, dicyclopentanyl, dicyclopentenyl, dicyclopentenyloxyethyl, isobornyl, 2-hydroxyethyl, 2-hydroxypropyl, and 4-hydroxybutyl; and polymer-type (meth)acrylates that are macromonomers such as a poly(n=2 or more)alkylene(C2-4) glycol mono(meth)acrylate, a poly(n=2 or more)alkylene(C2-4) glycol monoalkyl(C1-22) mono(meth)acrylate, and poly(n=2 or more)hydroxyalkanoic acid(C5-18) mono(meth)acrylate. In addition, a vinyl monomer, such as styrene, vinyltoluene, vinylnaphthalene, vinylcaprolactone, α-methylstyrene, and vinyl acetate, can also be used as the monomer 3.

It is preferable to use α-methylstyrene as the monomer 3 because the molecular weight can easily be controlled. Specifically, the monomer 3 preferably contains α-methylstyrene, and the content of a constituent unit derived from α-methylstyrene in the polymer is preferably 0.5 to 5% by mass, more preferably 1 to 3% by mass. When the content of the constituent unit derived from α-methylstyrene is less than 0.5% by mass, the polymerization may progress somewhat nonuniformly in some cases, or the monomer 2 may be left or gel in some cases. On the other hand, when the content of the constituent unit derived from α-methylstyrene is more than 5% by mass, α-methylstyrene whose polymerizability is somewhat poor may be left in some cases, or the molecular weight may be controlled excessively, which may somewhat lower the conversion in some cases.

In addition, it is preferable to use (meth) acrylic acid as the monomer 3. When the polymer contains a constituent unit derived from (meth)acrylic acid which is an acid constituent, thereby water-solubility of the polymer is improved, and when the quaternary ammonium salt group is also present in the polymer, the polymer exhibits amphoteric ionicity, and therefore the polymer is likely to be ionically adsorbed to the carbon material, which makes it possible to improve the dispersibility further. In addition, when the polymer exhibits the amphoteric ionicity, thereby intramolecular and intermolecular ion bonds are formed, which makes it easy to form a crosslinking structure, so that detachment from the carbon material can further be suppressed.

The content of the constituent unit derived from (meth)acrylic acid in the polymer is preferably 0.5 to 30% by mass, more preferably 1 to 10% by mass. When the content of the constituent unit derived from (meth)acrylic acid is less than 0.5% by mass, there is a tendency that an effect as an acid constituent is deficient. On the other hand, when the content of the constituent unit derived from (meth) acrylic acid is more than 30% by mass, the water-solubility may be excessively high in some cases and the water fastness of a coating film or the like to be formed is somewhat lowered in some cases.

In the polymeric dispersant (polymer), the content of the constituent unit (1) is 5 to 40% by mass, preferably 10 to 20% by mass, the content of the constituent unit (2) is 50 to 80% by mass, preferably 55 to 75% by mass, and the content of the constituent unit (3) is 0.5 to 40% by mass, preferably 1 to 31% by mass. Note that the total content of the constituent unit (1), the constituent unit (2), and the constituent unit (3) is assumed to be 100% by mass.

When the content of the constituent unit (1) is less than 5% by mass, the polymeric dispersant cannot be sufficiently adsorbed on the carbon material. On the other hand, when the content of the constituent unit (1) is more than 40% by mass, coloration or odor may occur in some cases, and the polymeric dispersants are likely to get together to be adsorbed on the carbon material, so that the polymeric dispersant may function as a flocculant in some cases.

The proportion of the constituent unit (2) in the constituent units contained in the polymer is the largest. Therefore, the polyalkylene glycol chains densely present in the polymer function as steric hindrance to keep the dispersed carbon materials from coming into close proximity, making it possible to disperse the carbon material stably. When the content of the constituent unit (2) is less than 50% by mass, the steric hindrance may be insufficient in some cases, and the polymer may be difficult to dissolve in water in some cases. On the other hand, when the content of the constituent unit (2) is more than 80% by mass, the monomer 2 whose reactivity is somewhat low is likely to be left without being polymerized. Note that when the content of the constituent unit (3) is more than 40% by mass, the function as a dispersant is lowered because the proportion of the other constituent units is relatively decreased.

The number average molecular weight of the polymer which is used as the polymeric dispersant is 5,000 to 20,000, preferably 10,000 to 15,000. When the number average molecular weight of the polymer is lower than 5,000, the amount of the constituent unit (2), derived from the monomer 2 which is a macromonomer, to be introduced is small, which makes the dispersion stability insufficient. On the other hand, when the number average molecular weight of the polymer is higher than 20,000, the viscosity of a resultant carbon material dispersion may be excessively high in some cases, and the necessary amount of the polymeric dispersant may be too large in some cases. The number average molecular weight herein is a value in terms of polystyrene, measured by gel permeation chromatography.

The above-described polymer which can be used as the polymeric dispersant can be produced by a conventionally known radical polymerization method or living radical polymerization method. It is preferable to produce the polymer by a living radical polymerization method among others because the molecular weight of the main chain can be controlled uniformly and an AB block copolymer can be made according to the method of adding monomers.

Examples of the living radical polymerization method include a polymerization method in which the molecular weight is adjusted using a chain transfer agent such as a thiol, an Atom Transfer Radical Polymerization method (ATRP method), a Reversible Addition-Fragmentation Chain Transfer Polymerization method (RAFT method), a Nitroxide-Mediated Polymerization method (NMP method), an Organotellurium-Mediated Living Radical Polymerization method

(TERP method), an Iodine Transfer Polymerization method (ITP method), a Reversible Chain Transfer Catalyzed Polymerization method (RTCP method), and a Reversible Complexation Mediated Polymerization method (RCMP method).

Polymerization conditions and the like are not particularly limited. An azo-based radical generator, a peroxide-based radical generator, a photosensitizer, and the like may be added to the reaction system. The polymerization type may be solventless, solution polymerization, emulsion polymerization, or the like. Among others, the polymerization type is preferably solution polymerization, and solution polymerization is more preferably performed in the above-described water-soluble organic solvent which can be blended in the carbon material dispersion. By performing solution polymerization in the water-soluble organic solvent, a resultant solution of the polymer can be blended as it is in the carbon material dispersion.

By polymerizing the monomer 1, the monomer 2, and the monomer 3 by solution polymerization or the like, a desired polymer can be obtained. In addition, after the monomer 1, the monomer 2, and the monomer 3 are polymerized, the amino group derived from the monomer 1 may be converted into a quaternary ammonium salt by adding a halogenated alkyl, such as benzyl chloride, naphthylmethyl chloride, acetynylmethyl chloride, pyrenylmethyl chloride, or naphthylmethyl bromide, to the reaction system. Further, the quaternary ammonium salt may be subjected to ion exchange to form a sulfonimide salt by adding a lithium salt of bis(trifluoromethylsulfone)imide, a lithium salt of bis(heptafluorobutylsulfone)imide, or the like. The dispersant which is used for the present invention can be used without particular restriction in a range where the carbon nanotube can be stabilized by dispersion. As the dispersant, a surfactant which is classified into the anionic, cationic, nonionic, or amphoteric surfactant, or a polymer-type dispersant can be mainly used.

On the other hand, when the liquid medium is an organic solvent, the dispersant is preferably a polymeric dispersant. Then, the dispersant is preferably a polymer containing 3 to 55% by mass of a constituent unit (A) derived from a monomer A represented by the following formula (A), 45 to 90% by mass of a constituent unit (C) derived from a monomer C represented by the following formula (C), and 0.5 to 20% by mass of a constituent unit (D) derived from a monomer D copolymerizable with the monomers A and C.

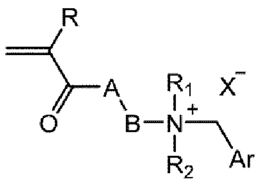

(A)

wherein R represents a hydrogen atom or a methyl group, A represents O or NH, B represents an ethylene group or a propylene group, $R_1$ and $R_2$ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl) imide.

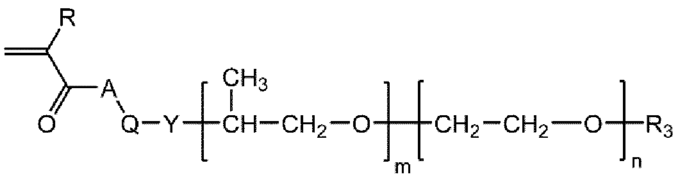

(C)

wherein R represents a hydrogen atom or a methyl group, A represents O or NH, Q represents an ethylene group r a methylethylene group, Y represents O, NHCOO, or NHCONH, m and n each independently represent an average number of repeating units of 0 or more and satisfy m + n = 20 to 100, and $R_3$ represents a C1-18 alkyl group, aryl group, or alkylaryl group.

The constituent unit (A) is a constituent unit derived from the monomer A and having a quaternary ammonium salt group. Adsorption of the quaternary ammonium salt group in the constituent unit (A) to the carbon material is considered to contribute to an improvement in dispersibility of the carbon material into the liquid medium containing the organic solvent. In addition, an aryl methyl group ($-CH_2-Ar$) is one of the substituents bonding to a nitrogen atom of the quaternary ammonium salt group. Affinity of an aromatic ring in this aryl methyl group to the carbon material is considered to improve the dispersibility of the carbon material. When the carbon numbers of $R_1$ and $R_2$ in formula (A) are too large, the aryl methyl group is destabilized due to steric hindrance and the quaternary ammonium salt group is unlikely to be formed. Therefore, $R_1$ and $R_2$ in formula (A) need to be each independently a methyl group or an ethyl group.

The quaternary ammonium salt group is an ionic functional group, and therefore the polymer (polymeric dispersant) having the constituent unit (A) having this quaternary ammonium salt group is expected to exhibit electric conductivity due to water adsorption or ionic conductivity. That is, by using the polymer having the constituent unit (A)

as the polymeric dispersant, it is expected to make a carbon material dispersion capable of forming a coating film in which lowering of the electric conductivity is suppressed.

The monomer A is preferably a monomer represented by the following formula (A-1).

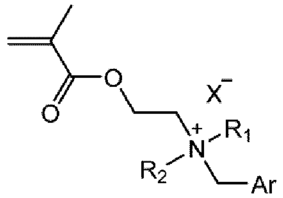

(A−1)

wherein $R_1$ and $R_2$ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonafluorobutanesulfonyl)imide.

Examples of the monomer represented by formula (A-1) include dimethylnaphthylmethylammoniumethyl methacrylate chloride, dimethylnaphthylmethylammoniumethyl methacrylate bromide, dimethylnaphthylmethylammoniumethyl methacrylate bis(trifluoromethyl)sulfonimide, dimethylnaphthylmethylammoniumethyl methacrylate bis(nonafluorobutanesulfonyl)imide, diethylnaphthylmethylammoniumethyl methacrylate chloride, diethylnaphthylmethylammoniumethyl methacrylate bromide, diethylnaphthylmethylammoniumethyl methacrylate bis(trifluoromethyl)sulfonimide, diethylnaphthylmethylammoniumethyl methacrylate bis(nonafluorobutanesulfonyl)imide, anthracenylmethyldimethylmethylammoniumethyl methacrylate chloride, anthracenylmethyldimethylmethylammoniumethyl methacrylate bromide, anthracenyldimethylmethylammoniumethyl methacrylate bis(trifluoromethyl)sulfonimide, anthracenyldimethylnaphthylammoniumethyl methacrylate bis(nonafluorobutanesulfonyl)imide, diethylpyrenylmethylammoniumethyl methacrylate chloride, diethylpyrenylmethylammoniumethyl methacrylate bromide, diethylpyrenylmethylammoniumethyl methacrylate bis(trifluoromethyl)sulfonimide, and diethylpyrenylmethylammoniumethyl methacrylate bis(nonafluorobutanesulfonyl)imide.

The polymeric dispersant is preferably a polymer further having a constituent unit (B) derived from a monomer B represented by the following formula (B). By using the polymer further having the constituent unit (B) as the polymeric dispersant, the dispersibility of the carbon material can be enhanced more. Note that by making an amino group in the constituent unit (B) into a quaternary salt, the quaternary ammonium salt group in the constituent unit (A) can be formed.

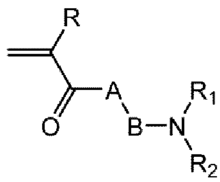

(B)

wherein R represents a hydrogen atom or a methyl group, A represents O or NH, B represents an ethylene group or a propylene group, and $R_1$ and $R_2$ each independently represent a methyl group or an ethyl group.

The constituent unit (B) has an amino group that is a basic group. Therefore, it is considered that a carboxy group or a phenolic hydroxy group formed on the surface of the carbon material due to oxidation or the like forms an ionic bond with an amino group in the constituent unit (B), and thereby the polymeric dispersant is likely to be adsorbed to the carbon material, so that the dispersibility of the carbon material is improved more. Further, it is considered that the dispersibility of the carbon material is improved more by a synergistic effect with adsorption of the quaternary ammonium salt group in the constituent unit (A) or a multicyclic aromatic group forming the quaternary ammonium salt group to the carbon material.

The monomer B is preferably a monomer represented by the following formula (B-1).

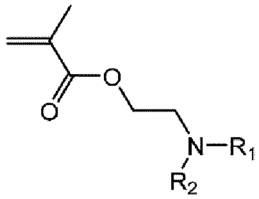

(B−1)

wherein $R_1$ and $R_2$ each independently represent a methyl group or an ethyl group.

Examples of the monomer represented by formula (B-1) include dimethylaminoethyl methacrylate and diethylaminoethyl methacrylate.

The constituent unit (C) is a constituent unit derived from the monomer C which is a so-called macromonomer and having a polyalkylene glycol chain. The polymeric dispersant having this constituent unit (C) is a polymer having a structure in which the polyalkylene glycol chain is grafted. Then, the polyalkylene glycol chain is a molecular chain capable of dissolving in the organic solvent which is a dispersion medium. A urethane bond (NHCOO) or a urea bond (NHCONH), represented by Y in formula (C), forms a hydrogen bond with a hydrogen atom forming a hydroxy group or the like which is generated on the surface of the carbon material by modification. Therefore, with regard to the polymeric dispersant, the polyalkylene glycol chain which is a graft chain dissolves in the organic solvent which is a dispersion medium, and the urethane bond (NHCOO) or a urea bond (NHCONH) in the constituent unit (C) and the main chain containing the constituent unit (A) are adsorbed to the carbon material. Then, the dissolved polyalkylene glycol chains function as steric hindrance among carbon materials in the form of particles and repel one another, making it possible to disperse the carbon material in the liquid medium favorably and stably over a long period of time.

In formula (C), m represents an average number of repeating units of a propyleneoxy group ($-CH(CH_3)CH_2O-$), and n represents an average number of repeating units of an ethyleneoxy group ($-CH_2CH_2O-$). Then, m and n each independently represent a numerical value of 0 or more and satisfy m + n = 20 to 100, and preferably m + n = 35 to 100. That is, the molecular weight of the polyalkylene glycol chain is preferably 880 to 5,800, and more preferably 1,540 to 5,800. Note that the C1-18 alkyl group represented by $R_3$ in formula (C) is preferably a methyl group, an ethyl group, a propyl group, a butyl group, a dodecyl group, a stearyl group, a phenyl group, a naphthyl group, or a nonylphenyl group.

The monomer C is preferably represented by the following formula (C-1).

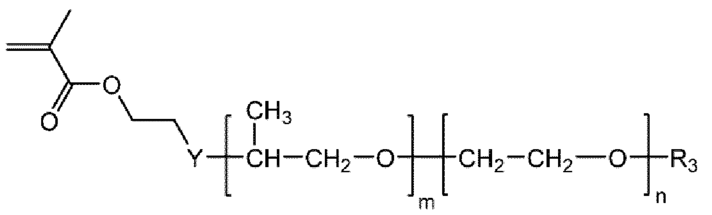

(C−1)

wherein Y represents NHCOO or NHCONH, m and n each independently represent an average number of repeating units of 0 or more and satisfy m + n = 20 to 100, and $R_3$ represents a C1-18 alkyl group, aryl group, or alkylaryl group.

Examples of the monomer represented by formula (C-1) include a macromonomer having a urethane bond (NHCOO) as Y, the macromonomer obtained by reacting methacryloyloxyethyl isocyanate and a glycol ether monoalkyl ether, such as polyethylene glycol monomethyl ether, polyethylene glycol polypropylene glycol monobutyl ether, polypropylene glycol monomethyl ether, or polyethylene glycol monododecyl ether; and a macromonomer having a urea bond (NHCONH) as Y, the macromonomer obtained by reacting methacryloyloxyethyl isocyanate and a monoether monoamine, such as polyethylene glycol polypropylene glycol monoamine.

In formulas (C) and (C-1), Y is preferably a urea bond (NHCONH) that does not need a catalyst when an isocyanate and an amine are reacted. In addition, the polyalkylene glycol chain in formulas (C) and (C-1) is preferably a random copolymer of propylene oxide and ethylene oxide. Further, in formulas (C) and (C-1), $R_3$ is preferably a methyl group. Note that the molecular weight of the polyalkylene glycol chain is preferably 2,000 to 4,000, and m and n preferably satisfy m + n = 36 to 90.

The constituent unit (D) is a constituent unit derived from the monomer D copolymerizable with the above-described monomers. Examples of the monomer D include (meth)acrylic acid-based monomers such as (meth)acrylic acid and a (meth)acrylic acid ester; and vinyl monomers such as styrene, vinyltoluene, vinylpyridine, vinylcaprolactone, vinylimidazole, α-methylstyrene, and vinyl acetate. Among others, α-methylstyrene is preferably used as the monomer D from the viewpoint of making it easy to control the molecular weight.

In the polymeric dispersant (polymer), the content of the constituent unit (A) is 3 to 55% by mass, preferably 5 to 50% by mass. When the content of the constituent unit (A) is less than 3% by mass, the adsorption to the carbon material is insufficient. On the other hand, when the content of the constituent unit (A) is more than 55% by mass, the solubility in the organic solvent is insufficient.

In the polymer, the content of the constituent unit (B) is preferably 30% by mass or less, more preferably 2 to 25% by mass. Note that the amine value of the polymer is 100 mgKOH/g or less, preferably 3 to 90 mgKOH/g. When the content of the constituent unit (B) is more than 30% by mass, coloration may occur to the polymer in some cases.

In the polymer, the content of the constituent unit (C) is 45 to 90% by mass, preferably 50 to 85% by mass. That is, the constituent unit (C) is a constituent unit contained in a relatively large amount in the polymer. When a large amount of the constituent unit (C) is contained, thereby the polyalkylene glycol chains are densely disposed. Therefore,

when the polymer as the polymeric dispersant is adsorbed to the carbon material, the densely disposed polyalkylene glycol chains function as steric hindrance to inhibit the carbon materials from being into close proximity, thereby making it possible to disperse the carbon material stably.

When the content of the constituent unit (C) in the polymer is less than 45% by mass, sufficient steric hindrance is not formed, making it difficult to enhance the dispersibility. On the other hand, when the content of the constituent unit (C) is more than 90% by mass, the monomer C which is a macromonomer may be left without being polymerized in some cases because the reactivity of the monomer C which is a macromonomer is somewhat poor.

In the polymer, the content of the constituent unit (D) is 0.5 to 20% by mass, preferably 0.6 to 16% by mass. When the content of the constituent unit (D) is more than 0.5% by mass, the function as a dispersant is lowered because the content of the other constituent units is relatively decreased.

It is preferable that the monomer A, the monomer B, and the monomer C be represented by formula (A-1), formula (B-1), and formula (C-1) respectively and the monomer D contain $\alpha$-methylstyrene because a carbon material dispersion can be made such that the carbon material, even when contained at a high concentration, is more unlikely to reaggregate and is more stably dispersed.

The number average molecular weight (Mw) in terms of polystyrene of the polymer which is used as the polymeric dispersant, measured by gel permeation chromatography (GPC), is 5,000 to 20,000, preferably 10,000 to 15,000. When the number average molecular weight of the polymer is lower than 5,000, the introduction amount of the constituent unit (C) derived from the monomer C which is a macromonomer is small, so that sufficient dispersion stability cannot be obtained. On the other hand, when the number average molecular weight of the polymer is more than 20,000, the amount of the polymeric dispersant necessary for dispersing the carbon material is too large and the viscosity of a resultant carbon material dispersion is excessively high.

The polymer which is the polymeric dispersant can be synthesized by a conventionally known method. For example, the polymer can be synthesized by a conventionally known radical polymerization method; and a living radical polymerization method, such as a polymerization method in which the molecular weight is adjusted using a chain transfer agent such as a thiol, an Atom Transfer Radical Polymerization method (ATRP method), a Reversible Addition-Fragmentation Chain Transfer Polymerization method (RAFT method), a Nitroxide-Mediated Polymerization method (NMP method), an Organotellurium-Mediated Living Radica Polymerization method (TERP method), an Iodine Transfer Polymerization method (ITP method), a Reversible Chain Transfer Catalyzed Polymerization method (RTCP method), or a Reversible Complexation Mediated Polymerization method (RCMP) method. Among others, a living radical polymerization method is preferable because the molecular weight of the main chain can be controlled more uniformly and an A-B block copolymer can be made according to the addition method.

The polymerization may be any of thermal polymerization and photopolymerization, and an azo-based radical generator, a peroxide-based radical generator, a photosensitizer, and the like may be added to the polymerization reaction system. The polymerization type may be any of solventless, solution polymerization, and emulsion polymerization, and among others, solution polymerization is preferable. It is preferable to use, in solution polymerization, the same organic solvent as the organic solvent which is used for the carbon material dispersion because a polymer after the polymerization reaction can be used as it is for the carbon material dispersion.

For example, by subjecting the above-described monomers to solution polymerization, an intended polymer (polymeric dispersant) can be obtained. Note that by adding a halogenated alkyl, such as benzyl chloride, naphthylmethyl chloride, acetynylmethyl chloride, pyrenylmethyl chloride, or naphthylmethyl bromide, to a reaction solution obtained by polymerizing the monomers B to D, an amino group in the constituent unit (B) can be converted into a quaternary ammonium salt to convert the constituent unit (B) into the constituent unit (A). Further, by adding a lithium salt of bis(trifluoromethylsulfone)imide, a lithium salt of bis(heptafluorobutylsulfone)imide, or the like, ion exchange can be performed for the anion ($Cl^-$, $Br^-$) which forms the quaternary ammonium salt.

The content of the dispersant in terms of solid content based on 100 parts by mass of the carbon material is preferably in a range of 10 to 500 parts by mass, more preferably 30 to 500 parts by mass. In addition, the content of the carbon material in the carbon material dispersion is preferably 10% by mass or less, more preferably 5% by mass or less. The content of the dispersant in the carbon material dispersion is preferably 30% by mass or less, more preferably 15% by mass or less. By setting the content of the dispersant based on the amount of the carbon material to the above-described range, a carbon material dispersion can be made such that the carbon material is more stably dispersed. When the amount of the dispersant based on the amount of the carbon material is excessively small, the dispersant cannot cover the surface of the carbon material sufficiently, so that dispersibility may be somewhat insufficient in some cases. On the other hand, when the amount of the dispersant based on the amount of the carbon material is excessively large, the viscosity of the carbon material dispersion may be likely to be increased in some cases, and the ratio of the carbon material in the solid content may be relatively lowered in some cases. In addition, when the dispersion is used as an ink or a coating material, physical properties, such as strength and electric conductivity, of a formed coating film may be somewhat lowered in some cases.

(Additives Etc.)

An additive, a resin, and the like can further be contained in the carbon material dispersion. Examples of the additive include a water-soluble dye, a pigment, an ultraviolet absorber, a light stabilizer, an antioxidizing agent, a leveling agent, a defoamer, an antiseptic, a mildew-proofing agent, a photopolymerization initiator, and other pigment dispersants. Examples of the resin include a polyolefin resin, a polyhalogenated olefin resin, a polyester resin, a polyamide resin, a polyimide resin, a polyether resin, a polyvinyl resin, a polystyrene resin, a polyvinyl alcohol resin, a polymethacrylate resin, a polyurethane resin, a polyepoxy resin, a polyphenol resin, a polyurea resin, and a polyethersulfone resin.

In the carbon material dispersion, a defoamer is preferably contained as an additive according to the apparatus which is used in a wetting and dispersing step. When a defoamer is contained, foaming during a dispersion treatment can be suppressed, and therefore shear force, collision force, and the like, which are applied during a dispersion treatment, acts effectively, so that a dispersion more excellent in dispersibility can be made.

(Carbon Material Dispersion)

Absorbance of the dispersion of the carbon material containing a carbon nanotube gives a gently curve from a wavelength of 300 nm to 1,000 nm. However, this curve (absorbance curve) varies significantly depending on dispersion state of the carbon nanotube. For example, the absorbance on the short wavelength side gives a large value when the amount of finely dispersed carbon nanotube is large. On the other hand, the absorbance on the long wavelength side gives a large value when the amount of the aggregate of the carbon nanotube is large. Accordingly, an absorbance ratio obtained by dividing the absorbance ($A_L$) on the short wavelength side by the absorbance ($A_H$) on the long wavelength side, ($A_L/A_H$), well reflects the dispersion state of the carbon material in a liquid medium. Specifically, as the carbon nanotube is dispersed more finely and uniformly, the absorbance ratio is higher, and as the carbon nanotube aggregates more, the absorbance ratio is smaller.

The wavelength $W_M$ which is a standard is defined as a median value of the wavelength $W_L$ on the short wavelength side and the wavelength $W_M$ on the long wavelength side ($W_M = (W_L + W_H)/2$). In a wavelength region near the median value, there is hardly an influence of the dispersion state of the carbon material, and therefore the absorbance at the wavelength $W_M$ is suitable as the standard for evaluating the dispersibility of the carbon material with the dilute dispersion.

The wavelength $W_L$ on the short wavelength side is arbitrarily selected from within a range of 350 to 550 nm, preferably within a range of 350 to 450 nm, more preferably within a range of 350 to 400 nm. The absorbance at a wavelength within the above-described ranges changes distinctly, and can stably be measured because there is less noise or peculiar peak variation. When the wavelength $W_L$ is shorter than 350 nm, the peak varies greatly with the progress of dispersion due to an irregular influence of light absorption and scattering by fine particles, which makes it difficult to use the wavelength $W_L$ as an accurate index. On the other, when the wavelength $W_L$ is longer than 550 nm, the absorbance changes indistinctly.

The wavelength $W_H$ on the long wavelength side is arbitrarily selected from within a range of 650 to 850 nm, preferably within a range of 700 to 850 nm, more preferably within a range of 700 to 800 nm. When the wavelength is within the above-described ranges, the absorbance of particles giving a small proportion of the absorption component and a large proportion of the scattering component can be checked. In addition, there is less noise or peculiar peak variation, so that measurement can stably be performed. When the wavelength $W_H$ on the long wavelength side is longer than 850 nm, noise is mixed in the peak, which makes it difficult to measure an accurate value. On the other hand, the range where the wavelength $W_H$ on the long wavelength side is shorter than 650 nm is not suitable as the index.

The difference between the wavelength $W_L$ and the wavelength $W_H$ is preferably 100 nm or more, more preferably 200 nm or more. By setting the difference between the wavelength $W_L$ and the wavelength $W_H$ to 100 nm or more, the dispersibility of the carbon material can be read more accurately. When the difference between the wavelength $W_L$ and the wavelength $W_H$ is too small, it may be difficult to evaluate the dispersion state of the carbon material precisely in some cases.

The absorbance of the dispersion varies depending on the content (concentration) of the carbon material. Therefore, the absorbance of a dilute dispersion prepared by diluting the dispersion is measured. As a diluent for diluting the dispersion, a blank solution having the same composition as that of the carbon material dispersion to be an object except that the carbon material is not contained is preferably used. By using such a blank solution, influences of diffusion, reaggregation, and environment of fine particles on the absorbance are suppressed, and the absorbance is made unsusceptible to an influence of a polymeric dispersant, which may be used as a dispersant in some cases, so that the absorbance can be measured more accurately.

To measure the absorbance accurately, it is preferable to set the content of the carbon material in a sample solution (dilute dispersion) within a range of 0.001 to 0.01% by mass usually. When the content is more than 0.01%, the quantity of scattering laser light transmitting during measurement is small, which may make it difficult to perform the

measurement accurately in some cases. On the other hand, when the content is less than 0.001% by mass, the value of absorbance is too small, which may make it difficult to perform accurate evaluation or comparison in some cases.

The absorbance at the wavelength $W_M$ of the dilute dispersion obtained by diluting the carbon material dispersion with a diluent containing a liquid medium is 1.2 to 2.2, preferably 1.5 to 2.0. When the absorbance at the wavelength $W_M$ of the diluted dispersion is less than 1.2, it is difficult to determine the dispersion state. On the other hand, it is difficult to measure an absorbance of higher than 2.2 accurately.

The value of the ratio of absorbance $A_L$ at the wavelength $W_L$ to absorbance $A_H$ at the wavelength $W_H$, ($A_L/A_H$), in a dilute dispersion varies according to the wavelengths $W_H$ and $W_L$. For example, when the value of "$A_L/A_H$" at the wavelength $W_L$ = 380 nm and the wavelength $W_H$ = 780 nm is "1.60," the value of "$A_L/A_H$" at the wavelength $W_L$ = 400 nm and the wavelength $W_H$ = 700 nm is "1.44," and the value of "$A_L/A_H$" at the wavelength $W_L$ = 350 nm and the wavelength $W_H$ = 800 nm is "1.78." When the value of "$A_L/A_H$" at the wavelength $W_L$ = 380 nm and the wavelength $W_H$ = 780 nm is "1.65," the value of "$A_L/A_H$" at the wavelength $W_L$ = 400 nm and the wavelength $W_H$ = 700 nm is "1.48," and the value of "$A_L/A_H$" at the wavelength $W_L$ = 350 nm and the wavelength $W_H$ = 800 nm is "1.85."

The absorbance at the wavelength $W_L$ of the dispersion is a physical property value which is an index of the dispersion state of the carbon material. On the other hand, the absorbance at the wavelength $W_H$ of the dispersion is a physical property value which is an index of the aggregation state of the carbon material. By using the wavelength $W_M$, which is a median value of the wavelengths $W_L$ and $W_H$, as a standard to obtain the value of the ratio of absorbance $A_L$ at the wavelength $W_L$ to absorbance $A_H$ at the wavelength $W_H$, ($A_L/A_H$), for the dilute dispersion obtained by diluting the carbon material dispersion with a diluent containing a liquid medium such that absorbance at the wavelength $W_M$ is 1.2 to 2.2, the dispersion state of the carbon material in this dispersion can accurately be evaluated.

When the wavelength $W_L$ is 380 nm, the wavelength $W_H$ is 780 nm, the wavelength $W_M$ is 580 nm, and absorbance at the wavelength $W_M$ is 1.5 to 2.0 (preferably, 1.8$\pm$0.02) for the dispersion, the ratio of absorbance $A_L$ to absorbance $A_H$, ($A_{380}/A_{780}$), is preferably 1.60 or more, more preferably 1.65 or more. By setting the value of the absorbance ratio ($A_{380}/A_{780}$)to the above-described ranges, a dispersion substantially free of coarse aggregates and more excellent in viscosity stability can be made even when the types and addition amounts of the carbon material and the dispersant vary.

When the value of the absorbance ratio ($A_{380}/A_{780}$) is too small, the carbon nanotube is not in a state of being dispersed finely and uniformly, and therefore the viscosity stability of the dispersion is low, and a large amount of coarse aggregates are contained. The dispersion of the present invention, wherein the absorbance ratio ($A_{380}/A_{780}$)is 1.40 or more, contains a carbon material containing a carbon nanotube, the carbon material in a state of being dispersed finely and uniformly, therefore have favorable viscosity stability, and is substantially free of a coarse aggregate, and even if the dispersion of the present invention contains fine aggregates, the amount thereof is extremely small.

When the carbon material is dispersed in a liquid medium by a dispersion treatment, a large amount of aggregates of the carbon material are present in the liquid medium at the initial stage of the dispersion treatment, and therefore the absorbance ratio is small. Then, the dispersant is adsorbed to the carbon nanotube with the progress of the dispersion treatment, and the aggregates are gradually disintegrated to increase the absorbance ratio. When the sizes of short sides of the aggregates are less than 100 $\mu$m, the absorbance ratio ($A_{380}/A_{780}$)becomes 1.60 or more. When the dispersion treatment is further performed, the carbon nano tube is in a state of being dispersed more uniformly in the liquid medium and the absorbance ratio ($A_{380}/A_{780}$) becomes 1.65 or more. However, when the dispersion treatment is performed excessively, carbon nanotubes whose structures are broken reaggregate and the absorbance ratio ($A_{380}/A_{780}$)is lowered to less than 1.40.

The dispersion of the present invention is excellent in viscosity stability (storage stability) because the viscosity is unlikely to change even after the elapse of a long period of time. Specifically, the change rate of the viscosity (mPa·s) at 25°C of the dispersion after the elapse of 10 days under a room temperature (25°C) condition based on the viscosity (mPa·s) at 25°C of the dispersion immediately after preparation (dispersion) is usually 15% or less, preferably 10% or less, more preferably 5% or less.

If aggregates having a short side of 100 $\mu$m or larger are present in the dispersion, intrinsic performance, such as electric conductivity and thermal conductivity, of the carbon nanotube is unlikely to be exhibited when the dispersion is applied to various applications; and growth or sedimentation of the aggregates occurs and therefore the viscosity stability and the storage stability are likely to be lowered. For example, when a dispersion containing aggregates having a short side of 100 $\mu$m or larger is used as a coating material, there is a tendency that uniform coating is difficult. In contrast, the dispersion of the present invention is substantially free of a coarse aggregate formed by the carbon material containing a carbon nanotube. Specifically, even when the dispersion immediately after preparation (dispersion) and the dispersion after the elapse of 10 days under a room temperature (25°C) condition are observed 5 times at a magnification of 200x using an optical microscope, not an aggregate having a short side of 100 $\mu$m or larger is never observed usually. Preferably, the number (average value) of aggregates having a short side of 20 $\mu$m or larger is 10 or more per observation. More preferably, the number (average value) of aggregates having a short side of 20 $\mu$m or more is one or more and less than 10 per observation, and particularly preferably, not a single aggregate having a short side of 20

μm or more is never observed even when the observation is performed 5 times.

(Method for Producing Carbon Material Dispersion)

The carbon material dispersion can be produced by preliminarily wetting the carbon material containing a carbon nanotube in the liquid medium using the dispersant according to a conventionally known method and then dispersing the carbon material. For example, stirring with a magnetic stirrer; stirring with a dissolver; three-roll kneading; ultrasonic dispersion; dispersion with a bead mill; and a wetting method and a dispersing method using an emulsification apparatus, a homogenizer, or the like can be used. From the viewpoint of simplicity of the process, it is preferable to stir and wet the carbon material containing a carbon nanotube with a magnetic stirrer, dissolver, or a homogenizer, and it is preferable to disperse the carbon material containing a carbon nanotube in combination with a high-pressure homogenizer. For example, it is preferable to disperse the carbon material containing a carbon nanotube with a bead mill using beads having a small particle diameter. In addition, wetting and stirring may be combined with a method of highly dispersing the carbon material containing a carbon nanotube taking damage to the carbon material, such as a carbon nanotube into consideration.

<Products>

In the above-described carbon material dispersion of the present invention, the carbon material containing a carbon nanotube is favorably dispersed without substantially producing a coarse aggregate, and therefore the carbon material dispersion of the present invention is excellent in viscosity stability. For this reason, the following products can be provided making use of such characteristics. Specifically, it is possible to provide any (first product) of products among a paint, an ink, a coating agent, a material for a resin-shaped article, an electrically conductive material, a thermally conductive material, and an antistatic material, each containing the above-described carbon material dispersion. Further, it is possible to provide any (second product) of products of a battery material and a mechanical component, each including a film formed with the above-described carbon material dispersion.

Examples of the method for preparing the paint or the ink include a method in which a solvent, a resin, and various additives and the like are added to the dispersion in such a way as to give the paint composition or the ink composition, and a method in which the dispersion is added to a commercially available paint or ink. Examples of the method for producing a resin-shaped article in which the carbon material containing a carbon nanotube is dispersed include a method in which a resin material in a molten state and the dispersion are mixed, and then a liquid medium is removed, and a method in which the dispersion is added to a finely powdered resin material, and then a liquid medium is removed or the carbon material is deposited.

## Examples

Hereinafter, the present invention will be described specifically based on Examples, but the present invention is not limited to these Examples. Note that "parts" and "%" in Examples and Comparative Examples are each on a mass basis unless otherwise noted.

<Preparation of Materials>

The following carbon materials, dispersants, and defoamer were prepared.

(Carbon Material)

[Carbon Nanotubes (CNT)]

- CNT-A: Multi-walled CNT, average diameter 30 to 50 nm, average length 5 to 12 μm, trade name "s40," manufactured by Shenzhen Sanshum Nano New Materials Co., Ltd. (SUSN)
- CNT-B: Multi-walled CNT, average diameter 15 nm, average length 3 μm, trade name "VGCF-X," manufactured by Resonac Holdings Corporation
- CNT-C: Multi-walled CNT, average diameter 9.5 nm, average length 1.5 μm, trade name "NC7000," manufactured by Nanocyl SA
- CNT-D: Multi-walled CNT, average diameter 14 to 16 nm, average length 90 to 100 μm, trade name "K-nanos 400T," manufactured by Kumho Petrochemical Co., Ltd.

- CNT-E: Multi-walled CNT, average diameter 6 to 9 nm, average length 100 to 200 μm, trade name "JENOTUBE 8c," manufactured by JEIO Co., Ltd.
- CNT-F: Multi-walled CNT, average diameter 5 to 7 nm, average length 50 to 150 μm, trade name "JENOTUBE 6A," manufactured by JEIO Co., Ltd.
- CNT-G: Single-walled CNT, average diameter 3 to 5 nm, average length 100 to 600 μm, trade name "SG-101," manufactured by Zeon Corporation

[Carbon Black (CB)]

- Average particle size 23 nm

(Dispersant)

- Dispersant a: trade name "DYSPERBYK-2012," manufactured by BYK-Chemie GmbH, solid content 40%
- Dispersant b: trade name "DYSPERBYK-102," manufactured by BYK-Chemie GmbH, solid content 99%
- Dispersant c: trade name "DYSPERBYK-9077," manufactured by BYK-Chemie GmbH, solid content 100%
- Dispersant d: trade name "FLOWREN GW-1500," manufactured by Kyoeisha Chemical Co., Ltd., solid content 100%
- Dispersant e: trade name "Dispex Ultra PA 4550," manufactured by BASF SE, solid content 50%
- Dispersant f: trade name "TEGODispers 670," manufactured by Evonik Industries AG, solid content 40%
- Dispersant g: sodium dodecyl sulfate (surfactant), manufactured by FUJIFILM Wako Pure Chemical Corporation
- Dispersant h: trade name "SUNROSE F01MC," manufactured by Nippon Paper Industries Co., Ltd., sodium salt of carboxymethyl cellulose, viscosity of 1%-by-mass aqueous solution 7 to 13 mPa·s, degree of etherification 0.65 to 0.75

(Defoamer)

- trade name "BYK-028," manufactured by BYK-Chemie GmbH

<Production of Dispersant>

Dispersants A1 to A3, dispersants B1 to B3, and dispersants C1 to C3 were produced according to the following procedures.

(Dispersant A1)

(a) Synthesis of Macromonomer

In a reaction apparatus equipped with a stirrer, a reflux condenser, a thermometer, and a dropping funnel, 142.5 parts (0.067 mol) of a one-end-aminated polypropylene glycol polyethylene glycol monomethyl ether copolymer (M41) (trade name "Genamin M41/2000," manufactured by Clariant AG, measured amine value 26.4 mgKOH/g) was placed, and it was stirred. In the dropping funnel, 10.4 parts (0.067 mol) of 2-isocyanatoethyl methacrylate (MOI) (trade name "Karenz MOI," manufactured by Resonac Holdings Corporation) was placed, and it was dropped over 30 minutes in the reaction apparatus cooled in a water bath. Part of the reaction solution was sampled for IR measurement to ascertain disappearance of the absorption of the isocyanate group derived from MOI and generation of a urea bond. In addition, the amine value of the product was 0.2 mgKOH/g to ascertain that the reaction between the amino group and the isocyanate group was almost completed. Note that the amine value was measured by means of an automatic potentiometric titrator using a 0.1 mol/L 2-propanolic hydrochloric acid solution. It was ascertained from those described above that a polypropylene glycol polyethylene glycol copolymer (MC-1) in which a methacryloyl group is bonded to one end thereof was produced. The number average molecular weight (Mn) of MC-1 in terms of polystyrene and polydispersity index (PDI = weight average molecular weight (Mw)/number average molecular weight (Mn)), both measured by gel permeation chromatography (GPC) using tetrahydrofuran (THF) as a developing solvent, were 2,800 and was 1.09, respectively. MC-1 is a macromonomer corresponding to the monomer 2 represented by formula (1), wherein the number

$n_H$ of repeating units is 1/2 or more of the total number $n_T$ of repeating units.

(b) Synthesis of Dispersant

In a reaction apparatus equipped with a stirrer, a reflux condenser, a thermometer, and a nitrogen introducing tube, 95 parts of diethylene glycol monobutyl ether (BDG), 70 parts of MC-1, 2.5 parts of α-methylstyrene (aMS), 10.5 parts of styrene (St), and 17 parts of 4-vinylpyridine (4VP) were placed, and the resultant mixture was heated to 75°C under nitrogen bubbling. At a point in time when the temperature reached 70°C, 5 parts of dimethyl 2,2'-azobis(isobutyrate) (V-601) (trade name "V-601," manufactured by FUJIFILM Wako Pure Chemical Corporation) was added to perform polymerization at 75°C for 4 hours. Further, 2.5 parts of V-601 was added to perform polymerization at 75°C for 4 hours, and thus a liquid containing a polymer (dispersant A1) was obtained. Mn, PDI, and the peak top molecular weight (PT) of dispersant A1 (polymer) were 9,600, 1.83, and 22,700, respectively, and a peak derived from MC-1 used as a raw material was hardly recognized. The amine value (in terms of net content of resin) of dispersant A1 was 86.2 mgKOH/g. The solid content of the liquid containing dispersant A1, measured using a moisture meter, was 50.4%.

(Dispersant A2)

In a reaction apparatus equipped with a stirrer, a reflux condenser, a thermometer, and a dropping funnel, 100 parts of dispersant A1 was placed. After 30 parts of BDG was added thereto for dilution, the resultant mixture was stirred at room temperature for 10 minutes for homogenization to obtain a solution. In the obtained solution, 0.081 mol of the amino group derived from 4VP is present. A solution containing 10.25 g of BDG and 10.25 g (0.081 mol) of benzyl chloride (BzCl) was dropped from the dropping funnel over 30 minutes at room temperature. After the dropping, the temperature was increased to 80°C, and the temperature was kept for 5 hours to obtain a liquid containing a polymer (dispersant A2). The solid content of the obtained liquid containing dispersant A2 was 40.2%. The amine value of dispersant A2 was almost 0 mgKOH/g, and therefore it can be seen that the reaction progressed quantitatively and all the amino groups derived from 4VP were converted into quaternary ammonium salts.

(Dispersant A3)

In a reaction apparatus equipped with a stirrer, a reflux condenser, a thermometer, and a nitrogen introducing tube, 95.0 parts of BDG, 70 parts of MC-1, 2.5 parts of aMS, 10.4 parts of St, 7.7 parts of methacrylic acid (MA), and 9.4 parts of 4VP were placed, and the resultant mixture was heated to 75°C under nitrogen bubbling. At a point in time when the temperature reached 70°C, 5 parts of V-601 was added to perform polymerization at 75°C for 4 hours. Further, 2.5 parts of V-601 was added to perform polymerization at 75°C for 4 hours, and thus a liquid containing a polymer (dispersant A3) was obtained. Mn, PDI, and PT of dispersant A3 (polymer) were 11,900, 1.88, and 25,900, respectively, and a peak derived from MC-1 used as a raw material was hardly recognized. The amine value (in terms of net content of resin) and acid value (in terms of net content of resin) of dispersant A3 were 50.0 mgKOH/g and 50.0 mgKOH/g, respectively. This polymer is a polymeric dispersant exhibiting amphoteric ionicity, the polymeric dispersant having an amino group and a carboxy group in the structure thereof. The solid content of the liquid containing dispersant A3 was 50.9%.

(Synthesis of Polymeric Dispersant B1)

(a) Synthesis of Macromonomer

In a reaction apparatus equipped with a stirrer, a reflux condenser, a thermometer, and a dropping funnel, 400 parts (0.2 mol) of a one-end aminated polypropylene glycol polyethylene glycol monomethyl ether copolymer (trade name "JEFFAMINE M2005," manufactured by Huntsman Corporation, amine value (measured): 28.05 mgKOH/g) (M2005) and 256.32 parts of propylene glycol monomethyl ether acetate (PGMAc) were placed, and the resultant mixture was stirred at room temperature for 10 minutes for homogenization. In another container, 31.04 parts (0.2 mol) of 2-isocyanatoethyl methacrylate (trade name "Karenz MOI," manufactured by Resonac Holdings Corporation) (MOI) and 31.04 parts of PGMAc were placed to prepare a mixed liquid. The mixed liquid prepared was dropped over 30 minutes in the reaction apparatus using the dropping funnel. Gentle generation of heat was observed from immediately after starting the dropping. Part of the reaction solution was sampled for IR measurement to ascertain disappearance of the absorption of the isocyanate group derived from MOI and generation of a urea bond, and ascertain generation of a macromonomer (A) having an α,β-unsaturated bond. The solid content, measured and calculated after heating the reaction solution at 140°C using a dryer until the weight reached constant weight, was 60.0%. Hereinafter, the solid content was measured and calculated by this method. The obtained macromonomer (A) is referred to as "MAC-1." The

number average molecular weight (Mn) of MAC-1 in terms of polystyrene, measured by GPC (developing solvent: tetrahydrofuran), was 3,500. Hereinafter, the molecular weight of each polymer was measured under this condition.

(b) Synthesis of Polymeric Dispersant

In a reaction apparatus equipped with a stirrer, a reflux condenser, a thermometer, and a nitrogen introducing tube, 30.8 parts of PGMAc, 179.6 parts of MAC-1, 3.0 parts of α-methylstyrene (αMS), 25.2 parts of styrene (St), and 18.0 parts of 2-(N,N-dimethylamino)ethyl methacrylate (DMAEMA) were placed, and the resultant mixture was heated to 70°C under nitrogen bubbling. Then, 3.0 parts of dimethyl 2,2'-azobis(isobutyrate) (trade name "V-601," manufactured by FUJIFILM Wako Pure Chemical Corporation) (V-601) was added to perform polymerization at 70°C for 4 hours. Further, 0.5 parts of V-601 was added to perform polymerization at 70°C for 4 hours, and thus a solution of a polymer (dispersant B1) was obtained. The number average molecular weight (Mn), polydispersity index (dispersity (PDI)) of dispersant B1 (polymer) were 6,400 and 2.2, respectively, and a peak derived from MC-1 used as a raw material was hardly recognized. The solid content of the solution containing dispersant B1 was 60.8%. The amine value of the polymer, measured using an automatic potentiometric titrator and using a 0.1 N hydrochloric acid/isopropanol solution as a titrant, was 41.9 mgKOH/g. Hereinafter, the amine value of each polymer was measured under this condition.

(Synthesis of Polymeric Dispersant B2)

(a) Synthesis of Macromonomer

In a reaction apparatus equipped with a stirrer, a reflux condenser, a thermometer, and a dropping funnel, 100 parts (0.05 mol) of one-end aminated polypropylene glycol polyethylene glycol monomethyl ether (trade name "JEFFAMINE M2005," manufactured by Huntsman Corporation, m + n = 35 (m=29, n=6), measured amine value 28.05 mgKOH/g) (M2005) and 100 parts of propylene glycol monomethyl ether acetate (PGMAc) were placed, and the resultant mixture was stirred at room temperature for 10 minutes for homogenization. In another container, 7.75 parts (0.05 mol) of 2-isocyanatoethyl methacrylate (trade name "Karenz MOI," manufactured by Resonac Holdings Corporation) (MOI) and 7.75 parts of PGMAc were placed and mixed to prepare a mixed liquid. The mixed liquid prepared was dropped over 30 minutes in the reaction apparatus to perform reaction. Part of the reaction solution was sampled for IR measurement to ascertain disappearance of the isocyanate group derived from MOI and generation of a urea bond. The amine value of the product, measured using an automatic potentiometric titrator and a 0.1 mol/L 2-propanolic hydrochloric acid solution, was 0.1 mgKOH/g. Thereby, it was ascertained that the reaction between the amino group and the isocyanate group was almost completed. The obtained product is a macromonomer (MCR-1) in which a methacryloyl group is bonded to one end of polypropylene glycol polyethylene glycol monomethyl ether (PPG/PEG). The solid content of the MCR-1 solution, measured using a moisture meter, was 50.0%. The number average molecular weight (Mn) of MCR-1 in terms of polystyrene, measured by gel permeation chromatography (GPC) using tetrahydrofuran (THF) as a developing solution, was 3,400.

(b) Synthesis of Polymeric Dispersant

In a reaction apparatus equipped with a stirrer, a reflux condenser, a thermometer, and a nitrogen introducing tube, 77.5 parts of PGMAc, 215.5 parts of the MCR-1 solution, 1.8 parts of α-methylstyrene (aMS), and 44.3 parts (0.281 mol) of 2-(N,N-dimethylamino)ethyl methacrylate (DMAEMA) were placed, and the resultant mixture was heated under nitrogen bubbling. At a point in time when the internal temperature reached 70°C, 3.0 parts of dimethyl 2,2'-azobis(isobutyrate) (trade name "V-601," manufactured by FUJIFILM Wako Pure Chemical Corporation) (V-601) was added, and the resultant mixture was heated to 75°C to perform polymerization for 4 hours. Then, 0.5 parts of V-601 was added to perform polymerization further at 75°C for 4 hours. Mn, dispersity (PDI), and peak top molecular weight (PT) of the product, measured sampling part of the reaction solution, were 7,900, 1.65, and 13,500, respectively, and a peak derived from MCR-1 was hardly recognized. The solid content of the reaction solution was 50.2%. The amine value (in terms of net content of resin) of the product was 102.9 mgKOH/g.

A solution of 7.8 parts of PGMAc and 35.7 parts (0.2819 mol) of benzyl chloride (BzCl) was dropped over 30 minutes under a room temperature condition. After the dropping, the resultant mixture was heated to 80°C, and the temperature was kept for 5 hours to obtain a liquid containing polymeric dispersant B2. Mn, PDI, and PT of polymeric dispersant B2 were 8,000, 1.53, and 13,700, respectively. The solid content of the liquid containing polymeric dispersant B2 was 50.2%. The amine value (in terms of net content of resin) of polymeric dispersant B2 was almost 0 mgKOH/g to ascertain that the reaction progressed almost quantitatively. Polymeric dispersant B2 obtained is a resin in which almost 100% of the amino groups derived from DMAEMA have been converted into quaternary salts by BzCl.

(Synthesis of Polymeric Dispersant B3)

In a reaction apparatus equipped with a stirrer, a reflux condenser, a thermometer, and a nitrogen introducing tube, 44.3 parts of PGMAc, 216 parts of the MCR-1 solution, 1.8 parts of aMS, 12.5 parts of styrene (St), and 31.7 parts (0.202 mol) of DMAEMA were placed, and the resultant mixture was heated under nitrogen bubbling. At a point in time when the internal temperature reached 70°C, 3.0 parts of V-601 was added, and the resultant mixture was heated to 75°C to perform polymerization for 4 hours. Then, 0.5 parts of V-601 was added to perform polymerization further at 75°C for 4 hours. Mn, PDI, and PT of the product, measured sampling part of the reaction solution, were 11,200, 1.86, and 20,700, respectively, and a peak derived from MCR-1 was hardly recognized. The solid content of the reaction solution was 50.1%. The amine value (in terms of net content of resin) of the product was 104.5 mgKOH/g.
The quaternary salt-forming reaction was performed in the same manner as in the example of synthesizing B2 described above except that 12.6 parts (0.050 mol) of 1-chloromethylpyrene (CMP) was used in place of BzCl, and thus a liquid containing polymeric dispersant B3 was obtained. Mn, PDI, and PT of polymeric dispersant B3 were 11,500, 1.85, and 20,800, respectively. The solid content of the liquid containing polymeric dispersant B3 was 50.2%. The amine value (in terms of net content of resin) of polymeric dispersant B3 was 53.5 mgKOH/g. Polymeric dispersant B3 obtained is a resin in which 25% of the amino groups derived from DMAEMA are converted into quaternary salts by CMP.

(Dispersant C1)

In a 1 L stainless steel container equipped with a stirrer, 400 g of isopropyl alcohol (IPA) and 60 g of water were placed, and 10 g of sodium hydroxide (purity 98%) was put thereinto while the stainless steel container was cooled. The solution was cooled to 25°C or lower, and then 20 g of pulverized pulp was put thereinto under stirring. Subsequently, the resultant mixture was stirred and mixed at 15 to 25°C for 60 minutes (mercerization) to prepare alkali cellulose. Subsequently, 30 g of a mixed solution of monochloroacetic acid/isopropyl alcohol = 1:2 was put into the stainless steel container while the stainless steel container was cooled to keep the temperature at 15 to 25°C, and the resultant solution was stirred and mixed for 15 minutes. Subsequently, the temperature of the solution was increased to 70°C over about 30 minutes while the stainless steel container was heated. The solution was stirred at 65 to 75°C for 45 minutes to perform etherification reaction. After the reaction was completed, unreacted sodium hydroxide was neutralized with acetic acid to separate a product. The product was washed with a 70% aqueous solution of methanol to remove by-products. The product was dried and pulverized to obtain carboxymethyl cellulose sodium salt (C1). The viscosity of a 1%-by-mass aqueous solution and degree of etherification of the obtained carboxymethyl cellulose sodium salt are shown in Table 1.

(Dispersants C2, C3)

Carboxymethyl cellulose sodium salts (C2, C3) were produced by the same method as the method for producing dispersant C1 except that the reaction time for etherification was changed as shown in Table 1. The viscosity of a 1%-by-mass aqueous solution and degree of etherification of each sodium salt are shown in Table 1.
The degree of etherification was measured with reference to Testing Methods for JIS-related Materials of Synthetic Detergents described in Journal of Japan Oil Chemist's Society 38(11), 962-967(1989). Specifically, about 1 g of carboxymethyl cellulose sodium salt was precisely weighed and placed in a porcelain crucible, and heated at a temperature (about 550 to 590°C) not exceeding 600°C for 1 hour for ashing. The ash was cooled to room temperature and transferred to a 500 mL beaker together with the crucible to add 250 ml of water. Then, 50 mL of a 0.05 mol/L sulfuric acid aqueous solution was added, and then boiling was performed for 30 minutes. After cooling was performed to room temperature, unreacted acid was titrated using 0.1 mol/L sodium hydroxide. Phenolphthalein was used as an indicator. The degree of etherification (DS) was calculated by the following formula, assuming the amount of 0.1 mol/L sodium hydroxide used for the titration to be "X" mL.

$$\text{Degree of etherification (DS)} = 162X/(10000 - 80X)$$

Table 1

| | Etherification reaction time (min) | Viscosity (mPa·s) of 1%-by-mass aqueous solution | Degree of etherification (DS) |
|---|---|---|---|
| Dispersant C1 | 45 | 271 | 0.61 |

(continued)

| | Etherification reaction time (min) | Viscosity (mPa·s) of 1%-by-mass aqueous solution | Degree of etherification (DS) |
|---|---|---|---|
| Dispersant C2 | 90 | 98 | 0.76 |
| Dispersant C3 | 120 | 31 | 0.84 |

<Measurement and Evaluation Methods>

(Measurement of Absorbance and Calculation of Absorbance Ratio)

A blank solution having the same composition as that of the dispersion except that the carbon material is not contained was prepared. After a base line was measured using the prepared blank solution, the absorbance of the sample solution was measured. The absorbance of the sample solution was measured using a spectrophotometer (trade name "Hitachi Spectrophotometer U-3310," manufactured by Hitachi High-Tech Corporation) equipped including a quartz cell having an optical path length of 10 mm. As for dilution with the blank solution, a calibration curve is created by plotting the absorbance at a wavelength of 580 nm against changes in dilution ratio to calculate a dilution ratio where the absorbance is 1.8±0.02, and a dispersion diluted to an intended concentration was prepared. In addition, it is also possible to perform dispersion after adjusting the carbon constituent concentration as intended at a stage before dispersing the carbon material or after adjusting the carbon constituent concentration so as to satisfy the above-described absorbance at an initial blending stage. The specific method for preparing the sample solution was as follows: firstly, the dispersion is taken in a polyethylene bottle, and an appropriate amount of the blank solution was added based on the dilution ratio determined from the calibration curve; the resultant mixture was stirred for 30 seconds using Vortex Mixer (manufactured by Scientific Industries, Inc.) to obtain the sample solution such that absorbance $A_{580}$ at a wavelength of 580 nm is 1.8±0.02. Absorbance $A_{380}$ at a wavelength of 380 nm and absorbance $A_{780}$ at a wavelength of 780 nm of the obtained sample solution were measured and an absorbance ratio ($A_{380}/A_{780}$) was calculated. Note that as for a dispersion prepared using a highly volatile organic solvent, the absorbance was measured putting a lid on the quartz cell.

(Evaluation of Dispersion)

[Measurement of Viscosity and Evaluation of Viscosity Stability]

The viscosity was measured for the dispersion immediately after dispersion and the dispersion after 10 days (after being left to stand at room temperature for 10 days) using an E-type viscometer including a rotor of 1°34' × R24 under a condition of a temperature of 25°C and a rotor revolution rate of 100 rpm. Note that as for a dispersion having a viscosity of lower than 25 mPa·s, the viscosity was measured using "VISCOMETER TVE-25L," (trade name) (manufactured by Toki Sangyo Co., Ltd; and as for a dispersion having a viscosity of 25 mPa·s or higher, the viscosity was measured using "VISCOMETER TVE-25H," (trade name) (manufactured by Toki Sangyo Co., Ltd. The viscosity stabilities was evaluated of the dispersion was evaluated according to the evaluation criteria described below.

Excellent: the viscosity change rate after 10 days based on the viscosity immediately after dispersion is less than 5%
Good: the viscosity change rate after 10 days based on the viscosity immediately after dispersion is 5% or more and less than 10%
Fair: the viscosity change rate after 10 days based on the viscosity immediately after dispersion is 10% or more and less than 15%
Poor: the viscosity change rate after 10 days based on the viscosity immediately after dispersion is 15% or more

[Observation of Aggregates]

The dispersion was taken in a polyethylene bottle and diluted by adding the blank solution in such a way as to make the concentration of the carbon material 0.1% by mass. The resultant mixture was stirred for 30 seconds using a Vortex mixer (manufactured by Scientific Industries, Inc.) to obtain a diluted solution. Onto a microscope slide, 30 μL of the diluted solution obtained was dropped, and a cover slip was put thereon to observe (200x) whether or not an aggregate was present using an optical microscope. A sample obtained by dropping the diluted solution onto a microscope slide was prepared 5 times for each of the dispersion immediately after dispersion and the dispersion after 10 days (after being left to stand at room temperature for 10 days), and the samples were observed to evaluate whether or not an

aggregate was present according to the evaluation criteria described below.

Excellent: an aggregate having a short side of 20 μm or longer is not observed in 5 observations.
Good: the number (average value) of aggregates having a short side of 20 μm or longer is one or more and less than 10 per observation, and an aggregate having a short side of 100 μm or longer is not observed in 5 observations.
Fair: the number (average value) of aggregates having a short side of 20 μm or longer is 10 or more per observation, and an aggregate having a short side of 100 μm or longer is not observed in 5 observations.
Poor: one or more aggregates having a short side of 100 μm or longer are observed in 5 observations.

<Preparation and Evaluation (1) of Dispersion (Aqueous)>

(Examples 1 to 17 and Comparative Examples 1 to 9)

Each constituent (other than CNT) of the type and amount shown in Table 2 was placed in a polyethylene bottle having a volume of 100 mL. The resultant mixture was stirred with a magnetic stirrer until the mixture became uniform, and then CNT of the type and amount shown in Table 2 was added, and the resultant mixture was further stirred. Then, 200 parts of zirconia beads having an average diameter of 0.8 mm was added thereto, and a dispersion treatment in which the treatment time is as shown in Table 2 was performed using Scandex (manufactured by Scandex AG). Thereafter, the zirconia beads were separated and removed to obtain a dispersion. The absorbance ratio ($A_{380}/A_{780}$)of the obtained dispersion is shown in Table 2. In addition, results of measurement of viscosity, results of evaluation of viscosity stability, and results of observation of aggregates for the obtained dispersion are shown in Table 3.

Table 2

| | CNT | | Dispersant | | Defoamer | IPA | Water | Dispersion apparatus | Treatment time (h) | Absorbance ratio ($A_{380}/A_{780}$) |
|---|---|---|---|---|---|---|---|---|---|---|
| | Type | Amount (parts) | Type | Amount (parts) | Amount (parts) | Amount (parts) | Amount (parts) | | | |
| Example 1 | A | 1.2 | a | 1.2 | 0.08 | 2.0 | 35.52 | Scandex | 0.5 | 1.673 |
| Example 2 | A | 1.2 | a | 1.2 | 0.08 | 2.0 | 35.52 | Scandex | 1 | 1.816 |
| Example 3 | A | 1.2 | a | 1.2 | 0.08 | 2.0 | 35.52 | Scandex | 2 | 1.821 |
| Example 4 | A | 1.2 | d | 0.5 | 0.08 | 2.0 | 36.24 | Scandex | 2 | 1.810 |
| Example 5 | C | 0.4 | a | 1.0 | 0.08 | 2.0 | 36.52 | Scandex | 1 | 1.833 |
| Example 6 | C | 0.4 | a | 1.0 | 0.08 | 2.0 | 36.52 | Scandex | 2 | 1.857 |
| Example 7 | E | 0.4 | a | 2.0 | 0.08 | 2.0 | 35.52 | Scandex | 2 | 1.797 |
| Example 8 | E | 0.4 | a | 2.0 | 0.08 | 2.0 | 35.52 | Scandex | 6 | 1.843 |
| Example 9 | E | 0.4 | d | 0.8 | 0.08 | 2.0 | 36.72 | Scandex | 6 | 1.854 |
| Example 10 | A | 1.2 | A1 | 2.4 | - | - | 36.4 | Scandex | 1 | 1.634 |
| Example 11 | A | 1.2 | A2 | 2.9 | - | - | 35.9 | Scandex | 1 | 1.640 |
| Example 12 | A | 1.2 | A1 | 2.4 | 0.08 | - | 36.32 | Scandex | 1 | 1.813 |
| Example 13 | A | 1.2 | A1 | 2.4 | 0.08 | 2.0 | 34.32 | Scandex | 1 | 1.794 |
| Example 14 | A | 1.2 | A1 | 1.0 | 0.08 | 2.0 | 35.72 | Scandex | 1 | 1.807 |
| Example 15 | A | 1.2 | A2 | 1.2 | 0.08 | 2.0 | 35.52 | Scandex | 1 | 1.809 |
| Example 16 | A | 1.2 | A1 | 1.0 | 0.08 | 2.0 | 35.72 | Scandex | 2 | 1.829 |
| Example 17 | A | 1.2 | A2 | 1.2 | 0.08 | 2.0 | 35.52 | Scandex | 2 | 1.831 |
| Comparative Example 1 | A | 1.2 | a | 1.2 | 0.08 | 2.0 | 35.52 | Scandex | 3 | 1.590 |
| Comparative Example 2 | A | 1.2 | a | 1.2 | 0.08 | 2.0 | 35.52 | Scandex | 4 | 1.373 |
| Comparative Example 3 | C | 0.4 | a | 1.0 | 0.08 | 2.0 | 36.52 | Scandex | 0.5 | 1.555 |
| Comparative Example 4 | C | 0.4 | a | 1.0 | 0.08 | 2.0 | 36.52 | Scandex | 12 | 1.495 |

(continued)

| | CNT | | Dispersant | | Defoamer | IPA | Water | Dispersion apparatus | Treatment time (h) | Absorbance ratio ($A_{380}/A_{780}$) |
|---|---|---|---|---|---|---|---|---|---|---|
| | Type | Amount (parts) | Type | Amount (parts) | Amount (parts) | Amount (parts) | Amount (parts) | | | |
| Comparative Example 5 | E | 0.4 | a | 2.0 | 0.08 | 2.0 | 35.52 | Scandex | 1 | 1.560 |
| Comparative Example 6 | E | 0.4 | b | 2.0 | 0.08 | 2.0 | 35.52 | Scandex | 2 | 1.251 |
| Comparative Example 7 | E | 0.4 | b | 2.0 | 0.08 | 2.0 | 35.52 | Scandex | 6 | 1.249 |
| Comparative Example 8 | A | 1.2 | A1 | 0.5 | 0.08 | 2.0 | 36.22 | Scandex | 1 | 1.402 |
| Comparative Example 9 | A | 1.2 | A1 | 1.0 | 0.08 | 2.0 | 35.72 | Scandex | 6 | 1.456 |

Table 3

| | Viscosity (mPa·s) | | Viscosity stability | Observation of aggregates |
|---|---|---|---|---|
| | Immediately after dispersion | After 10 days | | |
| Example 1 | 8.7 | 9.2 | Good | Good |
| Example 2 | 2.1 | 2.1 | Excellent | Excellent |
| Example 3 | 2.0 | 2.0 | Excellent | Excellent |
| Example 4 | 2.0 | 1.9 | Excellent | Excellent |
| Example 5 | 4.7 | 4.9 | Excellent | Excellent |
| Example 6 | 3.1 | 3.1 | Excellent | Excellent |
| Example 7 | 44.8 | 41.6 | Good | Good |
| Example 8 | 11.0 | 10.6 | Excellent | Excellent |
| Example 9 | 10.2 | 9.9 | Excellent | Excellent |
| Example 10 | 4.6 | 5.0 | Good | Fair |
| Example 11 | 3.6 | 3.9 | Good | Fair |
| Example 12 | 2.3 | 2.3 | Excellent | Excellent |
| Example 13 | 2.5 | 2.6 | Excellent | Excellent |
| Example 14 | 1.9 | 1.9 | Excellent | Excellent |
| Example 15 | 1.8 | 1.8 | Excellent | Excellent |
| Example 16 | 1.8 | 1.8 | Excellent | Excellent |
| Example 17 | 1.8 | 1.8 | Excellent | Excellent |
| Comparative Example 1 | 35.0 | 30.0 | Fair | Poor |
| Comparative Example 2 | 51.9 | 42.4 | Poor | Poor |
| Comparative Example 3 | 44. 8 | 49.5 | Fair | Poor |
| Comparative Example 4 | 72.7 | 86.4 | Poor | Poor |
| Comparative Example 5 | 95.7 | 108.4 | Fair | Poor |
| Comparative Example 6 | 11.2 | 8.6 | Poor | Poor |
| Comparative Example 7 | 16.2 | 11.6 | Poor | Poor |
| Comparative Example 8 | 14.0 | 16.7 | Poor | Poor |
| Comparative Example 9 | 40.0 | 35.0 | Fair | Poor |

<Preparation and Evaluation (2) of Dispersion (Aqueous)>

(Examples 18 to 24 and Comparative Examples 10 to 12)

Each constituent (other than CNT) of the type and amount shown in Table 4 was placed in a container of a 1/4G sand grinder mill (manufactured by AIMEX Corporation). The resultant mixture was stirred with a dissolver until the mixture became uniform, and then CNT of the type and amount shown in Table 4 was added, and the resultant mixture was further stirred. Then, 1,000 parts of zirconia beads having an average diameter of 0.5 mm was added thereto, and a dispersion treatment in which the treatment time is as shown in Table 4 was performed under stirring with a rate of 900 rpm using a sand grinder mill. Thereafter, the zirconia beads were separated and removed to obtain a dispersion. The absorbance ratio ($A_{380}/A_{780}$) of the obtained dispersion is shown in Table 4. In addition, results of viscosity measurement, results of viscosity stability evaluation, and results of aggregate observation for the obtained dispersion are shown in Table 5.

Table 4

| | CNT | | Dispersant | | Defoamer | IPA | Water | Dispersion apparatus | Treatment time (h) | Absorbance ratio ($A_{380}/A_{780}$) |
|---|---|---|---|---|---|---|---|---|---|---|
| | Type | Amount (parts) | Type | Amount (parts) | Amount (parts) | Amount (parts) | Amount (parts) | | | |
| Example 18 | A | 12.5 | a | 12.5 | 0.25 | - | 224.75 | Sand grinder | 2 | 1.729 |
| Example 19 | A | 25.0 | a | 25.0 | 0.25 | - | 199.75 | Sand grinder | 2 | 1.699 |
| Example 20 | C | 2.5 | a | 6.25 | 0.25 | 12.5 | 228.5 | Sand grinder | 8 | 1.637 |
| Example 21 | C | 2.5 | a | 6.25 | 0.25 | 12.5 | 228.5 | Sand grinder | 10 | 1.681 |
| Example 22 | C | 2.5 | a | 6.25 | 0.25 | 12.5 | 228.5 | Sand grinder | 15 | 1.715 |
| Example 23 | E | 2.0 | a | 10.0 | 0.25 | 12.5 | 225.25 | Sand grinder | 10 | 1.622 |
| Example 24 | E | 2.0 | a | 10.0 | 0.25 | 12.5 | 225.25 | Sand grinder | 15 | 1.692 |
| Comparative Example 10 | C | 2.5 | a | 6.25 | 0.25 | 12.5 | 228.5 | Sand grinder | 5 | 1.443 |
| Comparative Example 11 | C | 2.5 | a | 6.25 | 0.25 | 12.5 | 228.5 | Sand grinder | 30 | 1.564 |
| Comparative Example 12 | E | 2.0 | a | 10.0 | 0.25 | 12.5 | 225.25 | Sand grinder | 8 | 1.576 |

Table 5

| | Viscosity (mPa·s) | | Viscosity stability | Observation of aggregates |
|---|---|---|---|---|
| | Immediately after dispersion | After 10 days | | |
| Example 18 | 2.4 | 2.4 | Excellent | Excellent |
| Example 19 | 9.1 | 8.8 | Excellent | Good |
| Example 20 | 12.6 | 13.5 | Good | Fair |
| Example 21 | 5.8 | 5.4 | Good | Good |
| Example 22 | 3.1 | 3.1 | Excellent | Excellent |
| Example 23 | 22.6 | 24.4 | Good | Fair |
| Example 24 | 19.0 | 18.5 | Excellent | Good |
| Comparative Example 10 | 35.1 | 30.7 | Fair | Poor |
| Comparative Example 11 | 56.2 | 70.8 | Poor | Poor |
| Comparative Example 12 | 32.1 | 35.5 | Fair | Poor |

<Preparation and Evaluation (3) of Dispertion (Aqueous)>

(Examples 25 and 26, and Comparative Example 13)

Each constituent (other than CNT) of the type and amount shown in Table 6 was placed in a polyethylene bottle having a volume of 200 mL. The resultant muxture was stirred with a magnetic stirrer until the muxture became uniform, and then CNT of the type and amount shown in Table 6 was added, and the resultant mixture was further stirred. Subsequently, a dispersion treatment in which the treatment time is as shown in Table 6 was performed using an ultrasonic homogenizer (manufactured by Sonic Technology Co., Ltd.) with an output of 300 W to obtain a dispersion. During the dispersion treatment, stirring was performed using a magnetic stirrer under ice cooling. The absorbance ratio ($A_{380}/A_{780}$) of the obtained dispersion is shown in Table 6. In addition, results of measurement of viscosity, results of evaluation of viscosity stability, and results of observation of aggregates for the obtained dispersion are shown in Table 7.

Table 6

| | CNT | | Dispersant | | Defoamer | IPA | Water | Dispersion apparatus | Treatment time (h) | Absorbance ratio ($A_{380}/A_{780}$) |
|---|---|---|---|---|---|---|---|---|---|---|
| | Type | Amount (parts) | Type | Amount (parts) | Amount (parts) | Amount (parts) | Amount (parts) | | | |
| Example 25 | E | 0.8 | a | 4.0 | 0.1 | 5.0 | 90.1 | Ultrasonic homogenizer | 0.5 | 1.701 |
| Example 26 | E | 0.8 | a | 4.0 | 0.1 | 5.0 | 90.1 | Ultrasonic homogenizer | 2.5 | 1.771 |
| Comparative Example 13 | E | 0.8 | a | 4.0 | 0.1 | 5.0 | 90.1 | Ultrasonic homogenizer | 4 | 1.533 |

Table 7

| | Viscosity (mPa·s) | | Viscosity stability | Observation of aggregates |
|---|---|---|---|---|
| | Immediately after dispersion | After 10 days | | |
| Example 25 | 13.7 | 14.5 | Good | Good |
| Example 26 | 4.0 | 4.2 | Good | Excellent |
| Comparative Example 13 | 98.7 | 122.0 | Poor | Poor |

<Preparation and Evaluation (4) of Dispersion (Aqueous)>

(Examples 27 to 29 and 32 to 41, Reference Examples 30 and 31, and Comparative Examples 14 to 22)

Each constituent (other than CNT) of the type and amount shown in Table 8 was placed in a polyethylene bottle having a volume of 200 mL. The resultant mixture was stirred with a magnetic stirrer until the mixture became uniform, and then CNT of the type and amount shown in Table 8 was added, and the resultant mixture was further stirred. Subsequently, a high-pressure treatment was performed twice using a high-pressure homogenizer (manufactured by JOKOH CO., LTD.) including a nozzle having an inner diameter of 0.3 mm under a condition of a treatment pressure of 2 to 50 MP. Thereafter, a high-pressure dispersion treatment was performed by the number of times of treatments shown in Table 8 using a high-pressure homogenizer (manufactured by SUGINO MACHINE LIMITED) including a nozzle having an inner diameter of 0.1 mm under a condition of a treatment pressure of 150 MPa to obtain a dispersion. The absorbance ratio ($A_{380}/A_{780}$) of the obtained dispersion is shown in Table 8. In addition, results of measurement of the viscosity, results of evaluation of the viscosity stability, and results of observation of aggregates of the obtained dispersion are shown in Table 9. Note that in Comparative Example 17, CNT was not disintegrated probably because the amount of the dispersant based on the amount of CNT was too small, and clogging occurred in the chamber, so that the treatment was abandoned halfway through.

<Preparation and Evaluation (5) of Dispersion (Aqueous)>

(Example 42)

Each constituent (other than CNT) of the type and amount shown in Table 8 was placed in a polyethylene bottle having a volume of 200 mL. The resultant mixture was stirred with a magnetic stirrer until the mixture became uniform, and then CNT of the type and amount shown in Table 8 was added, and the resultant mixture was further stirred and then subjected to a treatment twice using a homogenizer (manufactured by SMT CO., LTD.). Subsequently, a high-pressure treatment was performed twice using a high-pressure homogenizer (manufactured by JOKOH CO., LTD.) including a nozzle having an inner diameter of 0.3 mm under a condition of a treatment pressure of 2 to 50 MP. Thereafter, a high-pressure dispersion treatment was performed by the number of times of treatments shown in Table 8 using a high-pressure homogenizer (manufactured by SUGINO MACHINE LIMITED) including a nozzle having an inner diameter of 0.1 mm under a condition of a treatment pressure of 150 MPa to obtain a dispersion. The absorbance ratio ($A_{380}/A_{780}$) of the obtained dispersion is shown in Table 8. In addition, results of measurement of the viscosity, results of evaluation of the viscosity stability, and results of observation of aggregates of the obtained dispersion are shown in Table 9.

<Preparation and Evaluation (6) of Dispersion (Aqueous)>

(Comparative Examples 23 and 24)

Each constituent (other than CNT) of the type and amount shown in Table 8 was placed in a polyethylene bottle having a volume of 200 mL. The resultant mixture was stirred with a magnetic stirrer until the mixture became uniform, and then CNT of the type and amount shown in Table 8 was added, and the resultant mixture was further stirred. Subsequently, a stirring treatment was performed using a high-shear mixer (manufactured by Silverson Machines Ltd.) at a peripheral speed of 8,000 rpm for 10 minutes. A high-pressure dispersion treatment was performed by the number of times of treatments shown in Table 8 using a high-pressure homogenizer (manufactured by SUGINO MACHINE LIMITED) including a nozzle having an inner diameter of 0.1 mm under a condition of a treatment pressure of 150 MPa

to obtain a dispersion. The absorbance ratio ($A_{380}/A_{780}$) of the obtained dispersion is shown in Table 8. In addition, results of measurement of the viscosity, results of evaluation of the viscosity stability, and results of observation of aggregates of the obtained dispersion are shown in Table 9.

Table 8

| | CNT | | Dispersant | | Water | Treatment apparatus | | Number of times of treatments* | Absorbance ratio ($A_{380}/A_{780}$) |
|---|---|---|---|---|---|---|---|---|---|
| | Type | Amount (parts) | Type | Amount (parts) | Amount (parts) | Wetting step | Dispersion treatment | | |
| Example 27 | E | 1.0 | a | 5.0 | 94.0 | High-pressure homogenizer | | 5 | 1.768 |
| Example 28 | D | 1.0 | a | 2.5 | 96.5 | High-pressure homogenizer | | 5 | 1.772 |
| Example 29 | F | 1.0 | a | 5.0 | 94.0 | High-pressure homogenizer | | 5 | 1.731 |
| Reference Example 30 | F | 1.0 | a | 6.25 | 92.75 | High-pressure homogenizer | | 5 | 1.780 |
| Reference Example 31 | F | 1.0 | a | 7.5 | 91.5 | High-pressure homogenizer | | 5 | 1.786 |
| Example 32 | E | 1.0 | a | 5.0 | 94.0 | High-pressure homogenizer | | 3 | 1.681 |
| Example 33 | E | 1.0 | d | 2.0 | 97.0 | High-pressure homogenizer | | 3 | 1.692 |
| Example 34 | E | 1.0 | e | 4.0 | 95.0 | High-pressure homogenizer | | 3 | 1.645 |
| Example 35 | E | 1.0 | A1 | 4.0 | 95.0 | High-pressure homogenizer | | 5 | 1.840 |
| Example 36 | E | 1.0 | A2 | 5.0 | 94.0 | High-pressure homogenizer | | 5 | 1.841 |
| Example 37 | E | 1.0 | A3 | 4.0 | 95.0 | High-pressure homogenizer | | 5 | 1.844 |
| Example 38 | E | 1.0 | h | 1.0 | 98.0 | High-pressure homogenizer | | 5 | 1.800 |
| Example 39 | E | 1.0 | C1 | 0.5 | 98.5 | High-pressure homogenizer | | 5 | 1.824 |
| Example 40 | E | 1.0 | C2 | 0.5 | 98.5 | High-pressure homogenizer | | 5 | 1.848 |
| Example 41 | E | 1.0 | C3 | 0.5 | 98.5 | High-pressure homogenizer | | 5 | 1.851 |
| Example 42 | E | 1.0 | a | 5.0 | 94.0 | High-pressure homogenizer | | 2 | 1.681 |
| Comparative Example 14 | F | 1.0 | a | 5.0 | 94.0 | High-pressure homogenizer | | 0 | 1.290 |
| Comparative Example 15 | F | 1.0 | a | 6.25 | 92.75 | High-pressure homogenizer | | 0 | 1.476 |
| Comparative Example 16 | F | 1.0 | a | 7.5 | 91.5 | High-pressure homogenizer | | 0 | 1.516 |

(continued)

| | CNT | | Dispersant | | Water | Treatment apparatus | | Number of times of treatments* | Absorbance ratio ($A_{380}/A_{780}$) |
|---|---|---|---|---|---|---|---|---|---|
| | Type | Amount (parts) | Type | Amount (parts) | Amount (parts) | Wetting step | Dispersion treatment | | |
| Comparative Example 17 | F | 1.0 | a | 1.0 | 98.0 | High-pressure homogenizer | | 0 | - |
| Comparative Example 18 | E | 1.0 | a | 5.0 | 94.0 | High-pressure homogenizer | | 0 | 1.355 |
| Comparative Example 19 | E | 1.0 | d | 2.0 | 97.0 | High-pressure homogenizer | | 0 | 1.376 |
| Comparative Example 20 | E | 1.0 | e | 4.0 | 95.0 | High-pressure homogenizer | | 0 | 1.293 |
| Comparative Example 21 | E | 1.0 | A3 | 4.0 | 95.0 | High-pressure homogenizer | | 0 | 1.409 |
| Comparative Example 22 | E | 1.0 | h | 1.0 | 98.0 | High-pressure homogenizer | | 0 | 1.411 |
| Comparative Example 23 | E | 1.0 | a | 5.0 | 94.0 | High-shear mixer | High-pressure homogenizer | 5 | 1.588 |
| Comparative Example 24 | E | 1.0 | h | 1.0 | 98.0 | High-shear mixer | High-pressure homogenizer | 5 | 1.566 |

*:Number of times of treatments in dispersion treatments

Table 9

| | Viscosity (mPa·s) | | Viscosity stability | Observation of aggregates |
|---|---|---|---|---|
| | Immediately after dispersion | After 10 days | | |
| Example 27 | 9.6 | 9.4 | Excellent | Good |
| Example 28 | 2.6 | 2.7 | Excellent | Good |
| Example 29 | 62.4 | 59.2 | Good | Good |
| Reference Example 30 | 46.1 | 45.7 | Excellent | Good |
| Reference Example 31 | 13.6 | 13.5 | Excellent | Good |
| Example 32 | 28.9 | 27.2 | Good | Good |
| Example 33 | 25.0 | 23.7 | Good | Good |
| Example 34 | 58.6 | 53.1 | Good | Fair |
| Example 35 | 21.5 | 21.0 | Excellent | Excellent |
| Example 36 | 16.8 | 16.6 | Excellent | Excellent |
| Example 37 | 14.9 | 14.8 | Excellent | Excellent |
| Example 38 | 118.3 | 119.1 | Excellent | Good |
| Example 39 | 1467.0 | 1411.0 | Excellent | Excellent |
| Example 40 | 499.7 | 504.9 | Excellent | Excellent |
| Example 41 | 168.8 | 171.1 | Excellent | Excellent |
| Example 42 | 28.6 | 27.1 | Good | Good |
| Comparative Example 14 | 78.1 | 112.0 | Poor | Poor |
| Comparative Example 15 | 63.8 | 76.5 | Poor | Poor |
| Comparative Example 16 | 42.9 | 50.2 | Poor | Poor |
| Comparative Example 17 | - | - | - | - |
| Comparative Example 18 | 38.7 | 55.1 | Poor | Poor |
| Comparative Example 19 | 44.9 | 54.3 | Poor | Poor |
| Comparative Example 20 | 45.1 | 56.8 | Poor | Poor |
| Comparative Example 21 | 91.5 | 106.2 | Poor | Poor |
| Comparative Example 22 | 194.9 | 161.7 | Poor | Poor |
| Comparative Example 23 | 11.5 | 10.2 | Fair | Fair |
| Comparative Example 24 | 152.7 | 136.0 | Fair | Fair |

<Preparation and Evaluation (7) of Dispersion (Aqueous)>

(Examples 43 to 47 and Comparative Examples 25 to 29 and 32)

A dispersion was obtained in the same manner as in Examples 27 to 41 and Comparative Examples 14 to 22, described above, except that conditions shown in Table 10 were adopted. The absorbance ratio ($A_{380}/A_{780}$) of the obtained dispersion is shown in Table 10. In addition, results of measurement of the viscosity, results of evaluation of the viscosity stability, and results of observation of aggregates of the obtained dispersion are shown in Table 11.

<Preparation and Evaluation (8) of Dispersion (Aqueous)>

(Comparative Examples 30 and 31)

Each constituent (other than CNT) of the type and amount shown in Table 10 was placed in a polyethylene bottle having a volume of 200 mL. The resultant mixture was stirred until the mixture became uniform, and then CNT of the type and amount shown in Table 10 was added, and the resultant mixture was further stirred. Subsequently, a high-pressure treatment was performed twice using a high-pressure homogenizer (manufactured by JOKOH CO., LTD.) including a nozzle having an inner diameter of 0.3 mm under a condition of a treatment pressure of 2 to 50 MP to obtain a dispersion of Comparative Example 30. The absorbance ratio ($A_{380}/A_{780}$) of the obtained dispersion is shown in Table 10. In addition, results of measurement of the viscosity, results of evaluation of the viscosity stability, and results of observation of aggregates of the obtained dispersion are shown in Table 11. Further, an attempt was made to subject a dispersion of Comparative Example 31 to a high-pressure dispersion treatment using a high-pressure homogenizer (manufactured by SUGINO MACHINE LIMITED) including a nozzle having an inner diameter of 0.1 mm under a condition of a treatment pressure of 150 MPa. However, clogging occurred in the chamber probably because the viscosity of the dispersion was too high, so that the treatment was abandoned halfway through.

Table 10

| | CNT | | CNT | | CB | Dispersant | | Dispersant | | Water | Treatment apparatus | | Number of times of treat-ments* | Absorbance ratio ($A_{380}/A_{780}$) |
|---|---|---|---|---|---|---|---|---|---|---|---|---|---|---|
| | Type | Amount (parts) | Type | Amount (parts) | Amount (parts) | Type | Amount (parts) | Type | Amount (parts) | Amount (parts) | Wetting step | Dispersion treatment | | |
| Example 43 | A | 1.5 | E | 0.5 | - | a | 4.0 | - | - | 94.0 | High-pressure homogenizer | | 3 | 1.762 |
| Example 44 | E | 0.8 | G | 0.2 | - | a | 5.0 | - | - | 94.0 | High-pressure homogenizer | | 5 | 1.789 |
| Example 45 | E | 1.0 | - | - | - | a | 2.5 | e | 2.0 | 94.5 | High-pressure homogenizer | | 5 | 1.733 |
| Example 46 | E | 0.8 | G | 0.2 | - | a | 4.0 | g | 1.0 | 94.0 | High-pressure homogenizer | | 5 | 1.753 |
| Example 47 | E | 1.5 | - | - | 1.5 | a | 11.5 | - | - | 85.5 | High-pressure homogenizer | | 5 | 1.737 |
| Comparative Example 25 | A | 1.5 | E | 0.5 | - | a | 4.0 | - | - | 94.0 | High-pressure homogenizer | | 0 | 1.549 |
| Comparative Example 26 | A | 1.5 | E | 0.5 | - | a | 4.0 | - | - | 94.0 | High-pressure homogenizer | | 10 | 1.532 |
| Comparative Example 27 | E | 0.8 | G | 0.2 | - | a | 5.0 | - | - | 94.0 | High-pressure homogenizer | | 0 | 1.266 |
| Comparative Example 28 | E | 0.8 | G | 0.2 | - | a | 5.0 | - | - | 94.0 | High-pressure homogenizer | | 15 | 1.594 |
| Comparative Example 29 | E | 1.0 | - | - | - | a | 2.5 | e | 2.0 | 94.5 | High-pressure homogenizer | | 0 | 1.367 |
| Comparative Example 30 | E | 1.5 | - | - | - | a | 7.5 | - | - | 91.0 | High-pressure homogenizer | | 0 | 1.358 |
| Comparative Example 31 | E | 1.5 | - | - | - | a | 7.5 | - | - | 91.0 | High-pressure homogenizer | | 1 | - |
| Comparative Example 32 | E | 1.5 | - | - | 1.5 | a | 11.5 | - | - | 85.5 | High-pressure homogenizer | | 0 | 1.435 |

*: Number of times of treatments in dispersion treatments

Table 11

| | Viscosity (mPa·s) | | Viscosity stability | Observation of aggregates |
|---|---|---|---|---|
| | Immediately after dispersion | After 10 days | | |
| Example 43 | 11.5 | 11.3 | Excellent | Excellent |
| Example 44 | 20.7 | 21.6 | Excellent | Excellent |
| Example 45 | 48.8 | 46.2 | Good | Good |
| Example 46 | 25.9 | 27.9 | Good | Good |
| Example 47 | 63.8 | 68.0 | Good | Good |
| Comparative Example 25 | 34.7 | 39.5 | Fair | Poor |
| Comparative Example 26 | 39.8 | 48.6 | Poor | Poor |
| Comparative Example 27 | 72.2 | 86.1 | Poor | Poor |
| Comparative Example 28 | 17.3 | 30.4 | Poor | Poor |
| Comparative Example 29 | 81.4 | 97.7 | Poor | Poor |
| Comparative Example 30 | 270.7 | 224.2 | Poor | Poor |
| Comparative Example 31 | - | - | - | - |
| Comparative Example 32 | 297.5 | 386.9 | Poor | Poor |

<Preparation and Evaluation (1) of Dispersion (Solvent-Based)>

(Examples 48 to 56, 59, and 60, Reference Examples 57 and 58, and Comparative Examples 33 to 45)

Each constituent (other than CNT) of the type and amount shown in Table 12 was placed in a polyethylene bottle having a volume of 100 mL. The resultant mixture was stirred with a magnetic stirrer until the mixture became uniform, and then CNT of the type and amount shown in Table 12 was added, and the resultant mixture was further stirred. Then, 200 parts of zirconia beads having an average diameter of 0.5 mm was added thereto, and a dispersion treatment in which the treatment time is as shown in Table 12 was performed using Scandex (manufactured by Scandex AG). Thereafter, the zirconia beads were separated and removed to obtain a dispersion. The absorbance ratio ($A_{380}/A_{780}$) of the obtained dispersion is shown in Table 12. In addition, results of measurement of viscosity, results of evaluation of viscosity stability, and results of observation of aggregates for the obtained dispersion are shown in Table 13. The meanings of abbreviations of liquid media used are as follows.

- IPA: isopropyl alcohol
- MEK: methyl ethyl ketone
- BuOAc: butyl acetate
- PGMAc: propylene glycol monomethyl ether acetate
- PGME: propylene glycol monomethyl ether
- NMP: N-methyl-2-pyrrolidone

Table 12

| | CNT | | Dispersant | | Liquid medium | | Dispersion apparatus | Treatment time (h) | Absorbance ratio ($A_{380}/A_{780}$) |
|---|---|---|---|---|---|---|---|---|---|
| | Type | Amount (parts) | Type | Amount (parts) | Type | Amount (parts) | | | |
| Example 48 | A | 1.2 | c | 0.8 | IPA | 38.0 | Scandex | 1 | 1.693 |
| Example 49 | A | 1.2 | f | 2.4 | IPA | 36.4 | Scandex | 1 | 1.698 |
| Example 50 | A | 1.2 | B1 | 1.2 | IPA | 37.6 | Scandex | 0.5 | 1.629 |
| Example 51 | A | 1.2 | B1 | 1.2 | IPA | 37.6 | Scandex | 1 | 1.721 |
| Example 52 | A | 1.2 | B2 | 1.4 | IPA | 37.4 | Scandex | 0.5 | 1.643 |
| Example 53 | A | 1.2 | B2 | 1.4 | IPA | 37.4 | Scandex | 1 | 1.724 |
| Example 54 | A | 1.2 | B1 | 1.2 | MEK | 37.6 | Scandex | 1 | 1.716 |
| Example 55 | A | 1.2 | B1 | 1.2 | BuOAc | 37.6 | Scandex | 1 | 1.707 |
| Example 56 | C | 0.4 | B1 | 0.7 | BuOAc | 38.9 | Scandex | 3 | 1.728 |
| Reference Example 57 | D | 0.36 | B1 | 3.0 | BuOAc | 36.64 | Scandex | 6 | 1.776 |
| Reference Example 58 | E | 0.36 | B1 | 3.0 | BuOAc | 36.64 | Scandex | 6 | 1.770 |
| Example 59 | B | 0.8 | B2 | 1.6 | PGMAc | 37.6 | Scandex | 1 | 1.654 |
| Example 60 | B | 0.8 | B2 | 1.6 | PGMAc | 37.6 | Scandex | 3 | 1.716 |
| Comparative Example 33 | A | 1.2 | c | 0.8 | IPA | 38.0 | Scandex | 0.5 | 1.538 |
| Comparative Example 34 | A | 1.2 | f | 2.4 | IPA | 36.4 | Scandex | 0.5 | 1.550 |
| Comparative Example 35 | A | 1.2 | B1 | 1.2 | IPA | 37.6 | Scandex | 0.25 | 1.513 |
| Comparative Example 36 | A | 1.2 | B1 | 1.2 | MEK | 37.6 | Scandex | 0.25 | 1.501 |
| Comparative Example 37 | A | 1.2 | B1 | 1.2 | BuOAc | 37.6 | Scandex | 0.25 | 1.495 |

(continued)

| | CNT | | Dispersant | | Liquid medium | | Dispersion apparatus | Treatment time (h) | Absorbance ratio ($A_{380}/A_{780}$) |
|---|---|---|---|---|---|---|---|---|---|
| | Type | Amount (parts) | Type | Amount (parts) | Type | Amount (parts) | | | |
| Comparative Example 38 | A | 1.2 | B1 | 1.2 | BuOAc | 37.6 | Scandex | 4 | 1.480 |
| Comparative Example 39 | C | 0.4 | B1 | 0.7 | BuOAc | 38.9 | Scandex | 0.5 | 1.502 |
| Comparative Example 40 | D | 0.36 | B1 | 3.0 | BuOAc | 36.64 | Scandex | 1 | 1.523 |
| Comparative Example 41 | E | 0.36 | B1 | 3.0 | BuOAc | 36.64 | Scandex | 1 | 1.469 |
| Comparative Example 42 | E | 0.36 | B1 | 1.2 | BuOAc | 38.44 | Scandex | 6 | 1.519 |
| Comparative Example 43 | E | 0.36 | c | 1.8 | BuOAc | 37.84 | Scandex | 6 | 1.573 |
| Comparative Example 44 | E | 0.36 | f | 4.5 | BuOAc | 35.14 | Scandex | 6 | 1.586 |
| Comparative Example 45 | B | 0.8 | B2 | 1.6 | PGMAc | 37.6 | Scandex | 10 | 1.531 |

Table 13

| | Viscosity (mPa·s) | | Viscosity stability | Observation of aggregates |
|---|---|---|---|---|
| | Immediately after dispersion | After 10 days | | |
| Example 48 | 4.3 | 4.5 | Good | Excellent |
| Example 49 | 4.6 | 4.3 | Good | Excellent |
| Example 50 | 6.3 | 6.8 | Good | Good |
| Example 51 | 3.8 | 3.9 | Excellent | Excellent |
| Example 52 | 5.9 | 6.3 | Good | Good |
| Example 53 | 3.7 | 3.8 | Excellent | Excellent |
| Example 54 | 1.3 | 1.4 | Excellent | Excellent |
| Example 55 | 2.2 | 2.3 | Excellent | Excellent |
| Example 56 | 3.5 | 3.6 | Excellent | Excellent |
| Reference Example 57 | 18.9 | 19.3 | Excellent | Excellent |
| Reference Example 58 | 75.2 | 77.7 | Excellent | Excellent |
| Example 59 | 5.6 | 6.0 | Good | Good |
| Example 60 | 4.3 | 4.3 | Excellent | Excellent |
| Comparative Example 33 | 29.3 | 34.3 | Poor | Poor |
| Comparative Example 34 | 40.2 | 45.5 | Fair | Poor |
| Comparative Example 35 | 27.3 | 33.4 | Poor | Poor |
| Comparative Example 36 | 15.8 | 19.8 | Poor | Poor |
| Comparative Example 37 | 23.7 | 29.3 | Poor | Poor |
| Comparative Example 38 | 26.9 | 36.9 | Poor | Fair |
| Comparative Example 39 | 10.6 | 13.4 | Poor | Poor |
| Comparative Example 40 | 66.9 | 85.2 | Poor | Poor |
| Comparative Example 41 | 272.0 | 356.0 | Poor | Poor |
| Comparative Example 42 | 109.0 | 81.4 | Poor | Poor |
| Comparative Example 43 | 26.8 | 41.0 | Poor | Poor |
| Comparative Example 44 | 36.3 | 53.7 | Poor | Poor |
| Comparative Example 45 | 52.6 | 67.2 | Poor | Poor |

<Preparation and Evaluation (2) of Dispersion (Solvent-Based)>

(Examples 61 to 69 and Comparative Examples 46 to 52)

Each constituent (other than CNT) of the type and amount shown in Table 14 was placed in a container of a 1/4G sand grinder mill (manufactured by AIMEX Corporation). The resultant mixture was stirred with a dissolver until the mixture became uniform, and then CNT of the type and amount shown in Table 14 was added, and the resultant mixture was further stirred. Then, 1,000 parts of zirconia beads having an average diameter of 0.5 mm was added thereto, and a dispersion treatment in which the treatment time is as shown in Table 14 was performed under stirring with a rate of 900 rpm using a sand grinder mill. Thereafter, the zirconia beads were separated and removed to obtain a dispersion. The absorbance ratio ($A_{380}/A_{780}$) of the obtained dispersion is shown in Table 14. In addition, results of viscosity measurement, results of viscosity stability evaluation, and results of aggregate observation for the obtained dispersion are shown in Table 15.

Table 14

| | CNT | | Dispersant | | Liquid medium | | Dispersion apparatus | Treatment time (h) | Absorbance ratio ($A_{380}/A_{780}$) |
|---|---|---|---|---|---|---|---|---|---|
| | Type | Amount (parts) | Type | Amount (parts) | Type | Amount (parts) | | | |
| Example 61 | A | 7.5 | c | 4.5 | MEK | 238.0 | Sand grinder | 1 | 1.692 |
| Example 62 | A | 7.5 | c | 4.5 | Toluene | 238.0 | Sand grinder | 1 | 1.675 |
| Example 63 | A | 7.5 | c | 4.5 | PGME | 238.0 | Sand grinder | 0.5 | 1.697 |
| Example 64 | A | 7.5 | c | 4.5 | PGME | 238.0 | Sand grinder | 1 | 1.710 |
| Example 65 | A | 7.5 | c | 4.5 | PGME | 238.0 | Sand grinder | 2 | 1.720 |
| Example 66 | A | 7.5 | c | 4.5 | PGME | 238.0 | Sand grinder | 3 | 1.712 |
| Example 67 | A | 12.5 | c | 7.5 | PGME | 230.0 | Sand grinder | 3 | 1.718 |
| Example 68 | A | 12.5 | B1 | 12.5 | PGME | 225.0 | Sand grinder | 3 | 1.726 |
| Example 69 | C | 2.5 | B1 | 4.5 | PGME | 243.0 | Sand grinder | 10 | 1.724 |
| Comparative Example 46 | A | 12.5 | c | 7.5 | MEK | 230.0 | Sand grinder | 0.25 | 1.503 |
| Comparative Example 47 | A | 12.5 | c | 7.5 | Toluene | 230.0 | Sand grinder | 0.25 | 1.479 |
| Comparative Example 48 | A | 12.5 | c | 7.5 | PGME | 230.0 | Sand grinder | 0.25 | 1.508 |
| Comparative Example 49 | A | 12.5 | c | 7.5 | PGME | 230.0 | Sand grinder | 10 | 1.470 |
| Comparative Example 50 | A | 12.5 | B1 | 12.5 | PGME | 225.0 | Sand grinder | 10 | 1.551 |
| Comparative Example 51 | C | 2.5 | B1 | 4.5 | PGME | 243.0 | Sand grinder | 5 | 1.488 |
| Comparative Example 52 | C | 2.5 | c | 2.5 | PGME | 245.0 | Sand grinder | 10 | 1.551 |

Table 15

| | Viscosity (mPa·s) | | Viscosity stability | Observation of aggregates |
|---|---|---|---|---|
| | Immediately after dispersion | After 10 days | | |
| Example 61 | 2.5 | 2.7 | Good | Good |
| Example 62 | 3.8 | 4.2 | Fair | Good |
| Example 63 | 5.8 | 6.0 | Good | Good |
| Example 64 | 5.3 | 5.5 | Good | Good |
| Example 65 | 4.4 | 4.8 | Good | Excellent |
| Example 66 | 4.1 | 4.4 | Good | Excellent |
| Example 67 | 8.4 | 9.1 | Good | Excellent |
| Example 68 | 7.4 | 7.6 | Excellent | Excellent |
| Example 69 | 18.1 | 18.4 | Excellent | Excellent |
| Comparative Example 46 | 14.0 | 17.0 | Poor | Poor |
| Comparative Example 47 | 21.1 | 24.5 | Poor | Poor |
| Comparative Example 48 | 29.3 | 33.4 | Fair | Poor |
| Comparative Example 49 | 69.6 | 94.0 | Poor | Poor |
| Comparative Example 50 | 44.7 | 58.6 | Poor | Poor |
| Comparative Example 51 | 78.7 | 95.6 | Poor | Poor |
| Comparative Example 52 | 7.9 | 16.8 | Poor | Poor |

<Preparation and Evaluation (3) of Dispersion (Solvent-Based)>

(Examples 70 to 75 and Comparative Examples 53 to 57)

Each constituent (other than CNT) of the type and amount shown in Table 16 was placed in a polyethylene bottle having a volume of 200 mL. The resultant mixture was stirred with a magnetic stirrer until the mixture became uniform, and then CNT of the type and amount shown in Table 16 was added, and the resultant mixture was further stirred. Subsequently, a dispersion treatment in which the treatment time is as shown in Table 16 was performed using an ultrasonic homogenizer (manufactured by Sonic Technology Co., Ltd.) with an output of 300 W to obtain a dispersion. During the dispersion treatment, stirring was performed using a magnetic stirrer under ice cooling. The absorbance ratio ($A_{380}/A_{780}$) of the obtained dispersion is shown in Table 16. In addition, results of measurement of viscosity, results of evaluation of viscosity stability, and results of observation of aggregates for the obtained dispersuion are shown in Table 17.

Table 16

| | CNT | | Dispersant | | Liquid medium | | Dispersion apparatus | Treatment time (h) | Absorbance ratio ($A_{380}/A_{780}$) |
|---|---|---|---|---|---|---|---|---|---|
| | Type | Amount (parts) | Type | Amount (parts) | Type | Amount (parts) | | | |
| Example 70 | A | 3.0 | c | 1.8 | PGME | 95.2 | Ultrasonic homogenizer | 1 | 1.728 |
| Example 71 | A | 3.0 | c | 1.8 | NMP | 95.2 | Ultrasonic homogenizer | 1 | 1.733 |
| Example 72 | A | 3.0 | B3 | 3.6 | PGME | 93.4 | Ultrasonic homogenizer | 1 | 1.736 |
| Example 73 | A | 3.0 | B3 | 3.6 | PGMAc | 93.4 | Ultrasonic homogenizer | 1 | 1.738 |
| Example 74 | B | 2.0 | B3 | 3.2 | PGMAc | 94.8 | Ultrasonic homogenizer | 1 | 1.638 |
| Example 75 | B | 2.0 | B3 | 4.0 | PGMAc | 94.0 | Ultrasonic homogenizer | 1 | 1.745 |
| Comparative Example 53 | A | 3.0 | c | 1.8 | PGME | 95.2 | Ultrasonic homogenizer | 0.25 | 1.517 |
| Comparative Example 54 | A | 3.0 | c | 1.8 | NMP | 95.2 | Ultrasonic homogenizer | 0.25 | 1.521 |
| Comparative Example 55 | A | 3.0 | c | 1.8 | NMP | 95.2 | Ultrasonic homogenizer | 4 | 1.476 |
| Comparative Example 56 | A | 3.0 | B3 | 3,6 | PGME | 93.4 | Ultrasonic homogenizer | 0.25 | 1.540 |
| Comparative Example 57 | B | 2.0 | B3 | 2.4 | PGMAc | 95.6 | Ultrasonic homogenizer | 1 | 1.552 |

Table 17

| | Viscosity (mPa·s) | | Viscosity stability | Observation of aggregates |
|---|---|---|---|---|
| | Immediately after dispersion | After 10 days | | |
| Example 70 | 3.5 | 3.9 | Fair | Good |
| Example 71 | 3.2 | 3.6 | Fair | Good |
| Example 72 | 3.3 | 3.6 | Good | Excellent |
| Example 73 | 1.9 | 2.1 | Good | Excellent |
| Example 74 | 5.8 | 6.2 | Good | Fair |
| Example 75 | 4.1 | 4.4 | Good | Excellent |
| Comparative Example 53 | 22.2 | 27.6 | Poor | Poor |
| Comparative Example 54 | 21.3 | 25.4 | Poor | Poor |
| Comparative Example 55 | 39.2 | 50.2 | Poor | Fair |
| Comparative Example 56 | 18.0 | 21.7 | Poor | Poor |
| Comparative Example 57 | 13.1 | 16.8 | Poor | Poor |

<Preparation and Evaluation (4) of Dispersion (Solvent-Based)>

(Examples 76 to 81, Reference Examples 82 to 85, and Comparative Examples 58 to 64)

Each constituent (other than CNT) of the type and amount shown in Table 18 was placed in a polyethylene bottle having a volume of 200mL. The resultant mixture was stirred with a magnetic stirrer until the mixture became uniform, and then CNT of the type and amount shown in Table 18 was added, and the resultant mixture was further stirred. Subsequently, a high-pressure treatment was performed twice using a high-pressure homogenizer (manufactured by JOKOH CO., LTD.) including a nozzle having an inner diameter of 0.3 mm under a condition of a treatment pressure of 2 to 50 MP. Thereafter, a high-pressure dispersion treatment was performed by the number of times of treatments shown in Table 18 using a high-pressure homogenizer (manufactured by SUGINO MACHINE LIMITED) including a nozzle having an inner diameter of 0.1 mm under a condition of a treatment pressure of 150 MPa to obtain a dispersion. The absorbance ratio ($A_{380}/A_{780}$) of the obtained dispersion is shown in Table 18. In addition, results of measurement of the viscosity, results of evaluation of the viscosity stability, and results of observation of aggregates of the obtained dispersion are shown in Table 19. Note that in Comparative Example 64, CNT was not disintegrated probably because the dispersant was not suitable for CNT, and clogging occurred in the chamber, so that the treatment was abandoned halfway through.

(Reference Example 86)

Each constituent (other than CNT) of the type and amount shown in Table 18 was placed in a polyethylene bottle having a volume of 200 mL. The resultant mixture was stirred with a magnetic stirrer until the mixture became uniform, and then CNT of the type and amount shown in Table 18 was added, and the resultant mixture was further stirred and then subjected to a treatment twice using a homogenizer (manufactured by SMT CO., LTD.). Subsequently, a high-pressure treatment was performed twice using a high-pressure homogenizer (manufactured by JOKOH CO., LTD.) including a nozzle having an inner diameter of 0.3 mm under a condition of a treatment pressure of 2 to 50 MP. Thereafter, a high-pressure dispersion treatment was performed by the number of times of treatments shown in Table 18 using a high-pressure homogenizer (manufactured by SUGINO MACHINE LIMITED) including a nozzle having an inner diameter of 0.1 mm under a condition of a treatment pressure of 150 MPa to obtain a dispersion. The absorbance

ratio ($A_{380}/A_{780}$) of the obtained dispersion is shown in Table 18. In addition, results of measurement of the viscosity, results of evaluation of the viscosity stability, and results of observation of aggregates of the obtained dispersion are shown in Table 19.

Table 18

| | CNT | | Dispersant | | Liquid medium | | Treatment apparatus | | Number of times of treatments* | Absorbance ratio ($A_{380}/A_{780}$) |
|---|---|---|---|---|---|---|---|---|---|---|
| | Type | Amount (parts) | Type | Amount (parts) | Type | Amount (parts) | Wetting step | Dispersion treatment | | |
| Example 76 | A | 3.0 | c | 1.8 | PGME | 95.2 | High-pressure homogenizer | | 5 | 1.732 |
| Example 77 | A | 3.0 | c | 1.8 | NMP | 95.2 | High-pressure homogenizer | | 5 | 1.736 |
| Example 78 | A | 3.0 | B1 | 3.0 | NMP | 94.0 | High-pressure homogenizer | | 5 | 1.753 |
| Example 79 | A | 3.0 | B2 | 3.5 | NMP | 93.5 | High-pressure homogenizer | | 5 | 1.766 |
| Example 80 | A | 3.0 | B3 | 3.6 | NMP | 93.4 | High-pressure homogenizer | | 5 | 1.757 |
| Example 81 | C | 1.0 | B1 | 1.7 | NMP | 97.3 | High-pressure homogenizer | | 5 | 1.769 |
| Reference Example 82 | D | 1.0 | B1 | 8.5 | NMP | 90.5 | High-pressure homogenizer | | 5 | 1.793 |
| Reference Example 83 | E | 1.0 | B1 | 8.5 | NMP | 90.5 | High-pressure homogenizer | | 3 | 1.675 |
| Reference Example 84 | E | 1.0 | B1 | 8.5 | NMP | 90.5 | High-pressure homogenizer | | 5 | 1.786 |
| Reference Example 85 | E | 1.0 | B2 | 10.0 | NMP | 89.0 | High-pressure homogenizer | | 5 | 1.791 |
| Reference Example 86 | E | 1.0 | B1 | 8.5 | NMP | 90.5 | High-pressure homogenizer | | 2 | 1.675 |
| Comparative Example 58 | A | 3.0 | c | 1.8 | PGME | 95.2 | High-pressure homogenizer | | 0 | 1.501 |
| Comparative Example 59 | A | 3.0 | c | 1.8 | NMP | 95.2 | High-pressure homogenizer | | 0 | 1.512 |
| Comparative Example 60 | A | 3.0 | B1 | 3.0 | NMP | 94.0 | High-pressure homogenizer | | 0 | 1.538 |

(continued)

| | CNT | | Dispersant | | Liquid medium | | Treatment apparatus | | Number of times of treatments* | Absorbance ratio ($A_{380}/A_{780}$) |
|---|---|---|---|---|---|---|---|---|---|---|
| | Type | Amount (parts) | Type | Amount (parts) | Type | Amount (parts) | Wetting step | Dispersion treatment | | |
| Comparative Example 61 | C | 1.0 | B1 | 1.7 | NMP | 97.3 | High-pressure homogenizer | | 0 | 1.497 |
| Comparative Example 62 | D | 1.0 | B1 | 8.5 | NMP | 90.5 | High-pressure homogenizer | | 0 | 1.501 |
| Comparative Example 63 | E | 1.0 | B1 | 8.5 | NMP | 90.5 | High-pressure homogenizer | | 0 | 1.436 |
| Comparative Example 64 | E | 1.0 | c | 5.0 | NMP | 94.0 | High-pressure homogenizer | | - | - |

*: Number of times of treatments in dispersion treatments

Table 19

| | Viscosity (mPa·s) | | Viscosity stability | Observation of aggregates |
|---|---|---|---|---|
| | Immediately after dispersion | After 10 days | | |
| Example 76 | 3.8 | 4.1 | Good | Excellent |
| Example 77 | 3.5 | 3.7 | Good | Excellent |
| Example 78 | 2.8 | 2.9 | Excellent | Excellent |
| Example 79 | 2.7 | 2.7 | Excellent | Excellent |
| Example 80 | 2.7 | 2.8 | Excellent | Excellent |
| Example 81 | 4.2 | 4.1 | Excellent | Excellent |
| Reference Example 82 | 7.3 | 7.0 | Excellent | Excellent |
| Reference Example 83 | 76.9 | 86.1 | Fair | Good |
| Reference Example 84 | 27.0 | 28.1 | Excellent | Excellent |
| Reference Example 85 | 25.6 | 26.6 | Excellent | Excellent |
| Reference Example 86 | 76.8 | 86.0 | Fair | Good |
| Comparative Example 58 | 24.2 | 28.8 | Poor | Poor |
| Comparative Example 59 | 22.9 | 26.7 | Poor | Poor |
| Comparative Example 60 | 18.5 | 21.0 | Fair | Poor |
| Comparative Example 61 | 14.9 | 16.6 | Fair | Poor |
| Comparative Example 62 | 26.2 | 29.1 | Fair | Poor |
| Comparative Example 63 | 96.8 | 138.4 | Poor | Poor |
| Comparative Example 64 | - | - | - | - |

As described above, when a dispersion treatment is performed in such a way as to make the absorbance ratio ($A_{380}/A_{780}$) 1.60 or more, thereby it is possible to obtain a dispersion: which enables the carbon material containing a carbon nanotube to exhibit the intrinsic performance thereof sufficiently, even if the composition or the dispersion process is different; which is excellent in viscosity stability; and in which an aggregate is not substantially observed.

(Application Example 1-1: Production Method in Scale-UP)

In a stainless steel container having a volume of 20 L, 1,000 parts of dispersant a, and 8,800 parts of water were placed. The resultant mixture was stirred with a dissolver until the mixture became uniform, and 200 parts of CNT-E was added little by little under stirring, and then the resultant mixture was stirred for 1 hour. The mixture was sufficiently mixed by performing a circulation-type treatment corresponding to 4 passes using a homogenizer (manufactured by SMT CO., LTD.). Subsequently, a circulation-type, high-pressure treatment was performed using a high-pressure homogenizer (manufactured by JOKOH CO., LTD.) including a nozzle having an inner diameter of 0.44 mm under a condition of a treatment pressure of 2 to 50 MPa for a time corresponding to 10 passes. Thereafter, a circulation-type, high-pressure treatment was performed using a high-pressure homogenizer(manufactured by SUGINO MACHINE LIMITED) including a nozzle having an inner diameter of 0.1 mm under a condition of a treatment pressure of 150 MPa for a time corresponding to 5 passes. The absorbance ratio ($A_{380}/A_{780}$) of the resultant dispersion was 1.811. In addition,

the viscosity of the resultant dispersion was 9.1 mPa·s, and the viscosity after 10 days was 8.8 mPa·s. Both of the result of evaluation of viscosity stability and the result of observation of aggregates were "Excellent."

(Application Example 2-1: Battery Material (Negative Electrode))

The following materials were used in producing a negative electrode of a lithium-ion battery.

[Negative Electrode Active Material]

- Graphene (manufactured by FUJIFILM Wako Pure Chemical Corporation)
- Silicon monoxide (manufactured by FUJIFILM Wako Pure Chemical Corporation)

[Binder]

- 10% polyacrylic acid aqueous solution (trade name "CLPA-C07," manufactured by FUJIFILM Wako Pure Chemical Corporation)
- Carboxymethyl cellulose (trade name "CMC Daicel 2200," manufactured by Daicel Miraizu Ltd.)

A negative electrode material was obtained by mixing 15 parts of silicon monoxide, 85 parts of graphene, 3 parts of the dispersion produced in Example 37, 30 parts of the 10% polyacrylic acid aqueous solution, and 2 parts of carboxymethyl cellulose using a planetary mixer. The negative electrode material was applied on a copper foil having a thickness of 20 $\mu$m using an applicator such that the weight per unit area after drying was 15 mg/cm$^2$. The applied negative electrode material was placed in an oven set at 120°C for 30 minutes for drying, and then the copper foil was rolled with a roll press to obtain a negative electrode. The obtained negative electrode had a volume resistivity of 0.2 $\Omega$·cm.

(Application Example 2-2: Battery Material (Negative Electrode))

A negative electrode was produced in the same manner as in Application Example 2-1, described above, except that the dispersion produced in Comparative Example 21 was used. The produced negative electrode had a volume resistivity of 0.6 $\Omega$·cm. It was found from those described above that by using a dispersion for which evaluation of dispersion is favorable, a negative electrode exhibiting a smaller volume resistivity value can be produced.

(Application Example 3-1: Antistatic Coating Agent)

In a plastic cup, 100 g of the dispersion produced in Example 37, 100 g of a polymer binder (trade name "NeoPac R-9699," manufactured by Kusumoto Chemicals, Ltd., acrylic urethane resin), and 800 of pure water were placed, and the resultant mixture was stirred with a dissolver to obtain an antistatic coating agent. The obtained antistatic coating agent was applied on a surface of a polyethylene terephthalate film (manufactured by Toray Corporation) having a thickness of 38 $\mu$m with a bar coater such that the coating film after drying had a thickness of 0.5 $\mu$m. The applied antistatic coating agent was placed in an oven set at 80°C for 10 minutes for drying to obtain an antistatic coating film. The obtained film had a surface resistivity of $7 \times 10^7$ $\Omega$·cm$^2$.

(Application Example 3-2: Antistatic Coating Agent)

An antistatic coating film was produced in the same manner as in Application Example 3-1, described above, except that the dispersion produced in Comparative Example 21 was used. The produced film had a surface resistivity of $9 \times 10^8$ $\Omega$·cm$^2$. It was found from those described above that by using a dispersion for which evaluation of dispersion is favorable, an antistatic coating film exhibiting a smaller surface resistivity value can be produced.

**Industrial Applicability**

The carbon material dispersion of the present invention is useful as a constituent material for a paint, an ink, a resin-shaped article, or the like, each exhibiting properties such as high electrical conductivity and high thermal conductivity, and is suitable for various applications, such as a battery material, an electronic component tray, an IC chip

cover, an electromagnetic wave shield, an automobile member, and a robot component.

## Claims

1. A carbon material dispersion excluding one that comprises a volatile salt, the carbon material dispersion comprising:

   a carbon material comprising a carbon nanotube;
   a liquid medium; and
   a dispersant, wherein:

   the content of the dispersant in terms of solid content based on 100 parts by mass of the carbon material is 204 parts by mass or less;
   when a dilute dispersion is obtained by diluting the carbon material dispersion with a diluent comprising the liquid medium such that absorbance at a wavelength $W_M$, which is a median value of an arbitrary wavelength $W_L$ within a range of 350 to 550 nm and an arbitrary wavelength $W_H$ within a range of 650 to 850 nm, is $1.8 \pm 0.02$, a ratio of absorbance $A_L$ at the wavelength $W_L$ to absorbance $A_H$ at the wavelength $W_H$, $(A_L/A_H)$, is 1.60 or more for the dilute dispersion;
   the diluent is a blank solution whose composition is the same as that of the carbon material dispersion except that the carbon material is not contained; and
   the wavelength $W_L$ is 380 nm, the wavelength $W_H$ is 780 nm, and the wavelength $W_M$ is 580 nm.

2. The carbon material dispersion according to claim 1, wherein

   the liquid medium is an aqueous medium,
   the dispersant is a cellulose derivative or a polymeric dispersant,
   the cellulose derivative is such that a 1%-by-mass aqueous solution thereof has a viscosity of 20 to 500 mPa·s and a degree of etherification thereof is 0.5 to 0.9, and
   the polymeric dispersant is a polymer comprising 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, wherein
   the monomer 3 comprises $\alpha$-methylstyrene and (meth)acrylic acid, and
   the content of a constituent unit derived from $\alpha$-methylstyrene is 0.5 to 5% by mass, the content of a constituent unit derived from (meth)acrylic acid is 0.5 to 30% by mass, and the number average molecular weight is 5,000 to 20,000:

   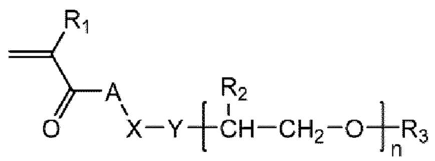

   (1)

   wherein $R_1$ represents a hydrogen atom or a methyl group, A represents O or NH, X represents an ethylene group or a propylene group, Y represents O, NHCOO, or NHCONH, each of $R_2$ independently represents a hydrogen atom or a methyl group, n represents an average number of repeating units of 20 to 100, and $R_3$ represents a hydrogen atom or a methyl group, provided that the number $n_H$ of repeating units where $R_2$ is a hydrogen atom is 1/2 or more of the number $n_T$ of repeating units in the whole polymer.

3. The carbon material dispersion according to claim 2, wherein the cellulose derivative is carboxymethyl cellulose or carboxymethyl cellulose sodium salt.

4. The carbon material dispersion according to claim 1, wherein

   the liquid medium is an organic solvent, and
   the dispersant is a polymer comprising 3 to 55% by mass of a constituent unit (A) derived from a monomer A represented by the following formula (A), 30% by mass or less of a constituent unit (B) derived from a monomer

B represented by the following formula (B), 45 to 90% by mass of a constituent unit (C) derived from a monomer C represented by the following formula (C), and 0.5 to 20% by mass of a constituent unit (D) derived from a monomer D copolymerizable with the monomers A, B, and C, the polymer having an amine value of 100 mgKOH/g or less and a number average molecular weight of 5,000 to 20,000:

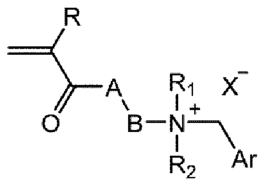

(A)

wherein R represents a hydrogen atom or a methyl group, A represents O or NH, B represents an ethylene group or a propylene group, $R_1$ and $R_2$ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl)imide;

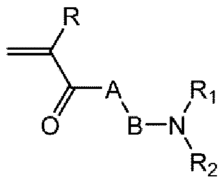

(B)

wherein R represents a hydrogen atom or a methyl group, A represents O or NH, B represents an ethylene group or a propylene group, and $R_1$ and $R_2$ each independently represent a methyl group or an ethyl group; and

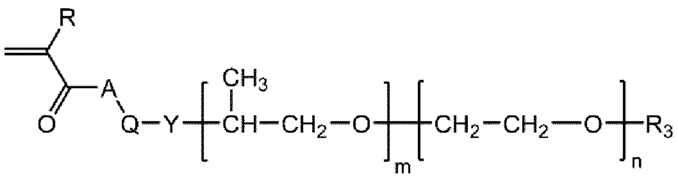

(C)

wherein R represents a hydrogen atom or a methyl group, A represents O or NH, Q represents an ethylene group r a methylethylene group, Y represents O, NHCOO, or NHCONH, m and n each independently represent an average number of repeating units of 0 or more and satisfy m + n = 20 to 100, and $R_3$ represents a C1-18 alkyl group, aryl group, or alkylaryl group.

**5.** The carbon material dispersion according to any one of claims 1 to 4, wherein

the content of the dispersant based on 100 parts by mass of the carbon material is 10 parts by mass or more,
the content of the carbon material is 10% by mass or less, and
the content of the dispersant is 30% by mass or less.

**6.** Use of the carbon material dispersion according to any one of claims 1 to 5 for producing a product of any one of a paint, an ink, a coating agent, a material for a resin-shaped article, an electrically conductive material, a thermally conductive material, and an antistatic material.

**7.** Use of the carbon material dispersion according to any one of claims 1 to 5 for producing a product of any one of a battery material and a mechanical component, the product comprising a film formed with the carbon material dispersion.

## INTERNATIONAL SEARCH REPORT

International application No.
**PCT/JP2022/029985**

**A. CLASSIFICATION OF SUBJECT MATTER**

***C09C 1/44***(2006.01)i; ***C09D 17/00***(2006.01)i; ***C08F 220/06***(2006.01)i; ***C08L 55/00***(2006.01)i; ***C08L 101/00***(2006.01)i; ***C09D 133/00***(2006.01)i; ***C09D 201/00***(2006.01)i; ***C09K 3/16***(2006.01)i; ***C09D 11/10***(2014.01)i; ***C01B 32/174***(2017.01)i; ***C08K 3/04***(2006.01)i; ***C09K 23/52***(2022.01)i
FI: C01B32/174; C08F220/06; C08K3/04; C08L55/00; C08L101/00; C09C1/44; C09D11/10; C09D17/00; C09D133/00; C09D201/00; C09K3/16 101B; C09K23/52

According to International Patent Classification (IPC) or to both national classification and IPC

**B. FIELDS SEARCHED**

Minimum documentation searched (classification system followed by classification symbols)

C09C1/44; C09D17/00; C08F220/06; C08L55/00; C08L101/00; C09D133/00; C09D201/00; C09K3/16; C09D11/10; C01B32/174; C08K3/04; C09K23/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/136428 A1 (TORAY INDUSTRIES) 01 September 2016 (2016-09-01) claims, examples, etc. | 1-7 |
| A | JP 6152924 B1 (TORAY INDUSTRIES) 28 June 2017 (2017-06-28) claims, examples, etc. | 1-7 |
| A | WO 2020/184012 A1 (TORAY INDUSTRIES) 17 September 2020 (2020-09-17) claims, examples, etc. | 1-7 |
| A | JP 2012-218993 A (PANASONIC CORP) 12 November 2012 (2012-11-12) claims, examples, etc. | 1-7 |
| P, A | WO 2022/009805 A1 (DAINICHISEIKA COLOR & CHEMICALS MFG. CO., LTD.) 13 January 2022 (2022-01-13) claims, examples, etc. | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 August 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/029985**

**C. DOCUMENTS CONSIDERED TO BE RELEVANT**

| Category* | Citation of document, with indication, where appropriate, of the relevant passages | Relevant to claim No. |
|---|---|---|
| P, A | JP 2021-176140 A (TOYO INK SC HOLDINGS CO LTD) 04 November 2021 (2021-11-04) claims, examples, etc. | 1-7 |

Form PCT/ISA/210 (second sheet) (January 2015)

**INTERNATIONAL SEARCH REPORT**
**Information on patent family members**

International application No.
**PCT/JP2022/029985**

| Patent document cited in search report | Publication date (day/month/year) | Patent family member(s) | Publication date (day/month/year) |
|---|---|---|---|
| WO 2016/136428 A1 | 01 September 2016 | US 2018/0002179 A1<br>claims, examples<br>EP 3263521 A1<br>CN 107207260 A<br>KR 10-2017-0122201 A | |
| JP 6152924 B1 | 28 June 2017 | US 2018/0261402 A1<br>claims, examples<br>WO 2017/047521 A1<br>EP 3425653 A1<br>CN 108028142 A<br>KR 10-2018-0044888 A | |
| WO 2020/184012 A1 | 17 September 2020 | US 2022/0149286 A1<br>claims, examples<br>EP 3936474 A1<br>CN 113557212 A | |
| JP 2012-218993 A | 12 November 2012 | (Family: none) | |
| WO 2022/009805 A1 | 13 January 2022 | (Family: none) | |
| JP 2021-176140 A | 04 November 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010174084 A
- JP 2013537570 W
- JP 2007076998 A
- JP 2020019924 A
- JP 2010254546 A
- JP 2015003859 A
- JP 6860740 B
- JP 6152924 B
- JP 6696632 B
- JP 2016028109 A
- JP 2016204203 A


### Non-patent literature cited in the description


- *Journal of Japan Oil Chemist's Society,* 1989, vol. 38 (11), 962-967